Europäisches Patentamt

European Patent Office

Office européen des brevets

(19)

(11) EP 1 560 087 A2

(12) EUROPEAN PATENT APPLICATION

(43) Date of publication:
03.08.2005 Bulletin 2005/31

(51) Int Cl.⁷: G05B 17/00

(21) Application number: 05250465.1

(22) Date of filing: 28.01.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 29.01.2004 US 540219 P

(71) Applicant: Invensys Systems, Inc.
Foxboro, MA 02035 (US)

(72) Inventors:
• Seto, Kenji
Houston, TX 77092 (US)
• Karbhari, Prashant
Missouri City, TX 77459 (US)
• Annamalai, Jagannadhan
Houston, TX 77042 (US)
• Desai, Sanjay M.
The Woodlands, TX 77384 (US)
• Jerome, David H.
La Habra, CA 90631 (US)
• Kovach, Joseph W., III
Placentia, CA 92870 (US)

(74) Representative: Hackney, Nigel John et al
Mewburn Ellis LLP
York House,
23 Kingsway
London WC2B 6HP (GB)

(54) **Method and apparatus for translation of process models to facilitate usage by plural simulation applications**

(57)    A method and system for process model translation is disclosed herein. The method includes generating a common process model based upon a first process model capable of being utilized by a first simulation program. A second process model is then generated based upon the common process model, the second process model being capable of being utilized by a second simulation program.

FIG. 1

**Description**

The present invention relates to process models used by simulation, optimization and related applications. More particularly, the invention relates to a method and apparatus for translating process models and related configurations so as to facilitate usage of the translated models by different simulation applications or other application programs.

Complex industrial systems such as, for example, power generation systems and chemical, pharmaceutical and refining processing systems, have experienced a need to operate ever more efficiently in order to remain competitive. This need has resulted in the development and deployment of process modeling systems. These modeling systems are used to construct a process model, or flowsheet, of an entire processing plant using equipment or component models provided by the modeling system. These process models are used to design and evaluate new processes, redesign and retrofit existing process plants, and optimize the operation of existing process plants.

Simulation of complex industrial systems has been effected by using numerical models representative of the physical characteristics of such systems to identify and understand the factors contributing to behavior of the system. Any system that can be quantitatively described using equations and rules can be simulated. Multiple vendors offer a number of modeling systems capable of being used to effect a number of different types of simulation and related operations such as, for example, steady-state simulation, dynamic simulation, optimization, and data-reconciliation. Dynamic process simulation generally involves simulating the performance of a proposed or existing plant or industrial process characterized by a performance that changes over time. One objective in modeling such a system is to understand the way in which it is likely to change so that the behavior of the system may be predicted and ways of improving the behavior through design or control modifications may be identified.

Traditionally, only steady-state simulators have been employed to evaluate process designs. However, many design decisions require knowledge of the transient response and interactions of the process. As a consequence, in recent years steady state simulators have been used to quickly and efficiently evaluate a broad range of possible designs. A dynamic simulator has then been employed if necessary in order to rigorously evaluate the final design candidates. By using a dynamic simulator to screen the final steady-state designs, the likelihood is increased that dynamic operation of the implemented process will not behave unexpectedly.

Existing simulation systems generally store their respective configurations in the form of text files, XML files, databases or some proprietary binary structures. In spite of these differences, all such systems are believed to include certain fundamental information required to model a unit, flowsheet or an entire process. In this regard existing simulation applications require the development of proprietary process models structured in accordance with the requirements of the applicable application. Unfortunately, this effectively precludes interchangeably using process models across different modeling systems. For example, process models developed for simulation applications are precluded from being used in connection with dynamic simulation applications, and vice-versa. As a consequence, the typically substantial investment made in developing models for a given system is prevented from being leveraged across other modeling systems.

The present invention provides a translation system sufficiently flexible to enable process models developed for various modeling systems to be translated into formats consistent with the specifications of other modeling systems. The translation system of the invention thus facilitates preservation of the investment made in developing models of a particular type (e.g., steady-state) by facilitating their translation to a different type (e.g., dynamic). The inventive translation system may also be utilized to enable process models developed for the modeling system of a particular vendor to be translated into a form required for use within the modeling system of a different vendor. In this way the present invention allows the modeling system best suited for a given application to be selected irrespective of the extent of prior investment in developing existing models and personnel expertise.

In one aspect the present invention pertains to a method for process model translation. The method includes generating a common process model based upon a first process model capable of being utilized by a first simulation program. Preferably, a second process model is then generated based upon the common process model, the second process model being capable of being utilized by a second simulation program.

In another aspect the present invention is directed to a method for process model translation pursuant to which information from a first process model capable of being used by a first simulation program is transferred to a common process model. Preferably, the method further includes generating a second process model capable of being used by a second simulation program. Preferably, the generation process includes estimating, based upon the information within the common process model, data required during operation of a second simulation program. In addition, the generation process preferably includes inserting representations of one or more units of equipment into the common process model.

The present invention also pertains in a further aspect to a process model translation framework in communication with a steady-state process model database and a dynamic process model database. Preferably, the translation framework includes a steady-state process model objects holder disposed to interface with the steady-state process model database, and a dynamic process model objects holder disposed to interface with said dynamic process model database. Preferably, the translation framework also includes a translation-layer objects holder operatively coupled to the steady-state process model objects holder and the dynamic process model objects holder, the translation-layer objects holder defining a common process model.

In yet another aspect the present invention is directed to a translator module configured to translate a first process model useable by a first simulation program into a second process model useable by a second simulation program. Preferably, the translator module includes a model subsystem disposed to define a plurality of equipment models corresponding to equipment units referenced in a flowsheet produced by the first simulation program. In this regard the model subsystem preferably defines at least first and second equipment models based upon one of the equipment units. Preferably, the translator module further includes a validation subsystem configured to perform a validation operation with respect to the plurality of equipment models. In addition, the translator module preferably includes a streams subsystem configured to store a plurality of stream objects based upon information defined within first process model and to create at least one additional stream for providing a connection between the at least first and second equipment models.

Preferably the present invention includes apparatus for implementing any one or more of the above aspects.

The present invention preferably includes any one of the aspects in combination with one or more of the other aspects. Thus, preferred and optional features of one aspect may apply to the other aspects.

## BRIEF DESCRIPTION OF THE DRAWINGS

For a better understanding of the nature of the features of the invention, reference should be made to the following detailed description taken in conjunction with the accompanying drawings, in which:

FIG. 1 illustratively represents a software simulation environment containing a common process model of the present invention.

FIG. 2 illustrates a flowsheet model translation process in accordance with the present invention.

FIG. 3 illustratively represents a bi-directional flowsheet model translation process used in describing certain aspects of the model translation capabilities facilitated by the present invention.

FIG. 4 is a flowchart which represents a process model translation process consistent with one aspect of the present invention.

FIG. 5 illustratively represents the network architecture of a system within which one embodiment of the present invention may be incorporated.

FIG. 6 illustrates an architecture of a client unit disposed to be used with an embodiment of the present invention.

FIG. 7 is a block diagram representative of the internal architecture of a server configured in accordance with the present invention.

FIG. 8 further illustrates certain additional components comprising a modeling engine.

FIG. 9 further illustrates one embodiment of the interaction between a modeling engine and a solution engine of a simulation module.

FIG. 10 shows a high-level architecture of a software simulation environment containing a more detailed representation of a translation-layer common process model of the present invention.

FIG. 11 provides a high-level representation of the elements involved in translating a steady-state process model database into a dynamic process model database in a manner consistent with the present invention.

FIG. 12 provides a simplified overview of the logical relationship between the primary packages and classes comprising an exemplary implementation of the translator module.

FIGS. 13 and 14 respectively illustrate the performance of exemplary mapping operations.

FIG. 15 provides a more detailed representation of the logical relationship between the primary packages and classes comprising an exemplary implementation of a translator module of the present invention.

FIG. 16 is a flow diagram representative of the manner in which specific holder and mapper objects are accessed from an access object.

FIG. 17 is a flow diagram illustrating execution of an exemplary startup sequence and loading of steady-state simulation data performed during initiation of a flowsheet translation operation consistent with the invention.

FIG. 18 shows a flow diagram representative of the translation of steady-state simulation data into translation-layer information.

FIG. 19 depicts a flow diagram representative of the translation of translation-layer process model data into dynamic simulation model data.

FIGS. 20 and 21 are flow diagrams which collectively represent the process of validation of dynamic simulation model data translated from a steady-state process model in accordance with the invention.

FIGS. 22-25 describe user views associated with the translation of a steady-state flowsheet and its importation into a dynamic simulation environment.

## DETAILED DESCRIPTION OF EMBODIMENTS OF THE INVENTION

## OVERVIEW OF FLOWSHEET TRANSLATION PROCESS

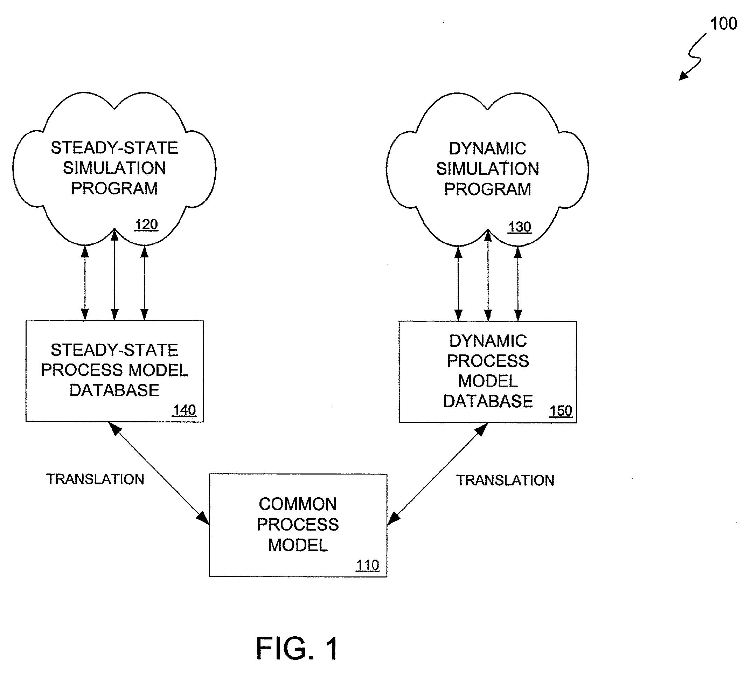

FIG. 1 illustratively represents a software simulation environment 100 containing a common process model 110 of the present invention. As shown, the simulation environment 100 further includes a steady-state simulation program 120 and a dynamic simulation program 130. The steady-state simulation program 120 operates upon a steady-state process model database 140 and the dynamic simulation program 130 operates upon a dynamic process model database 150. Consistent with the invention, the common process model 110 facilitates translation of the steady-state process model database 140 into the dynamic process model database 150, and vice-versa.

One motivation for the development of the common process model 110 of the embodiment of FIG. 1 has been to enable the design, operations and business aspects of an enterprise to share in a consistent understanding of the cause and effect relationships characterizing a given physical plant. The common process model 110 is advantageously disposed to grow in complexity and scope throughout the lifecycle of the plant, from conceptual design through to decommissioning. It is envisioned that design engineers could initially use the steady-state simulation program 120 to generate the mass and energy balances needed to define the plant. In accordance with the invention, the common process model 110 could then be developed from the steady- state process model database 140. The common process model 110 would then be used to generate and initialize a corresponding dynamic process model database 150. As is discussed hereinafter, generation of the dynamic process model database 150 will generally entail adding a final set of control elements (e.g. control valves and variable speed drives), actuator dynamics, sensor lags, flow resistances, and equipment volumes and elevations to the information inherent within the common process model 110.

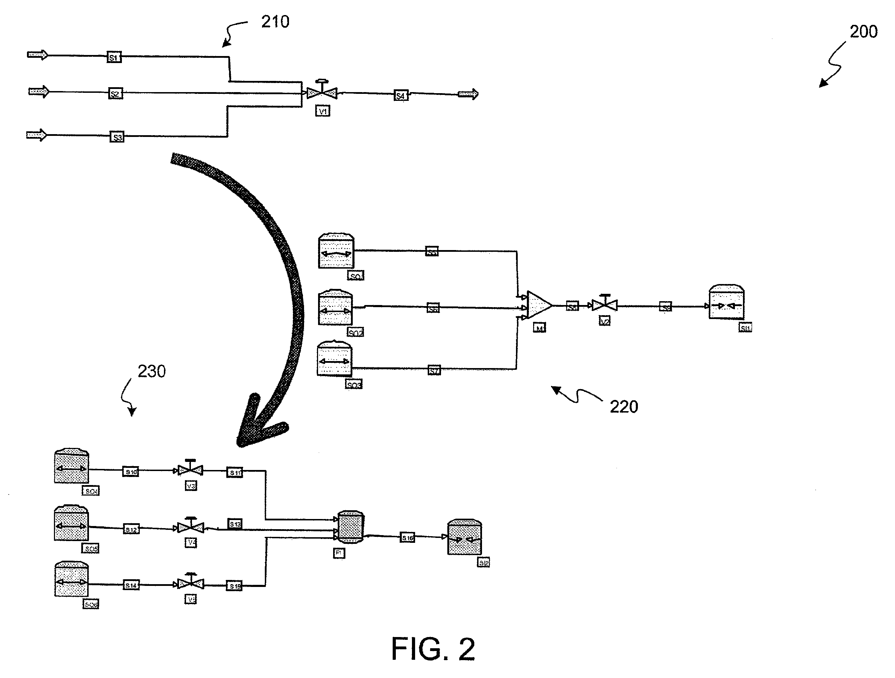

Turning now to FIG. 2, illustrated is a flowsheet model translation process 200 in accordance with the present invention. As shown, a particular implementation of the steady-state process model database 140 represented by stead-state flowsheet 210 is translated into a particular implementation of the common process model 110 represented by virtual intermediate common flowsheet 220. In the example of FIG. 2, this translation involves adding various source and valve elements to the steady-state process model database 140 represented by the steady-state flowsheet 210. The common process model 110 is then translated into the dynamic process model database 150, which is represented by dynamic flowsheet 230.

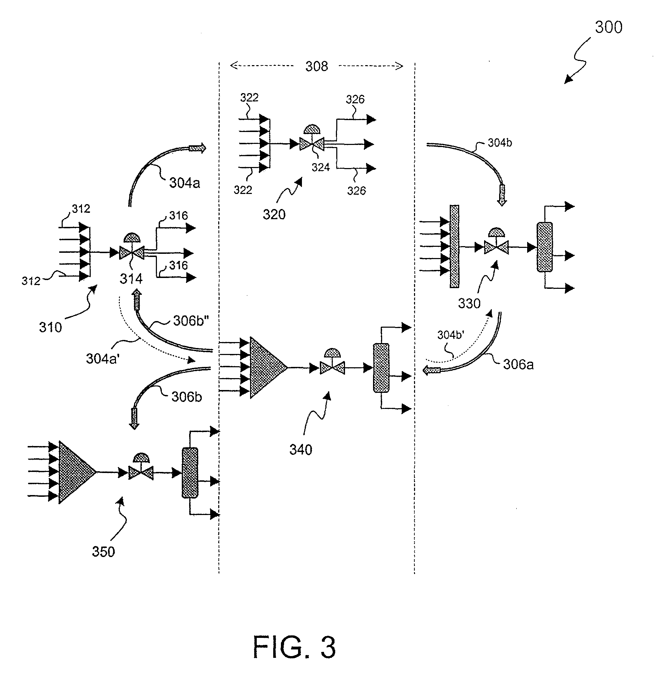

FIG. 3 illustratively represents a bi-directional flowsheet model translation process 300 to which reference will be made in describing certain aspects of the model translation capabilities facilitated by the present invention. As is indicated by FIG. 3, a forward model translation 304 and a reverse model translation 306 are facilitated by a translation layer 308. Specifically, the process 300 contemplates the forward translation 304a of a steady-state process model 310 into a first translation-layer process model 320. The first translation-layer process model 320 is then translated 304b into a dynamic process model 330. As shown, the process 300 further contemplates a reverse translation 306a of the dynamic process model 330 into a second translation-layer process model 340. The second translation-layer process model 340 may then either be translated 306b into the steady-state process model 310 or into an alternate steady-state process model 350.

The common process models embodied by the first and second translation-layer process models 320, 340 may be structured in a variety of ways. For example, one approach is to permit the applicable source application (e. g., steady-state simulation program 120 or dynamic simulation program 130) to determine the nature of the common process model(s) within the translation layer 308. This is represented in FIG. 3 by the translation 304a of steady-state process model 310 into first translation-layer process model 320 and its associated translation 304b into dynamic process model 330. Consistent with this approach, the translation-layer process model 320 is structured substantially identically to the steady-state process model 310. In this regard both the steady-state process model 310 and the first translation-layer process model 320 are seen to contain representations of five feed streams 312, 322 delivered to a valve 314, 324 configured to generate three product streams 316, 326. In the example of FIG. 3, the subsequent translation 304b of the first translation-layer process model 320 to the dynamic process model 330 involves creation of a header 333 for receiving the five feed streams 332, a valve 334, a merged product stream 335, a valve output stream 336, and a drum 337 disposed to produce three product streams 338. During the reverse translation 306a, the applicable dynamic simulation program would translate the header 333, valve 334 and drum 337 of process model 330 into a mixer 343, valve 344 and separator 337 of the second translation-layer process model 340. The translation from the translation layer 308 into a steady-state simulation could comprise a translation 306b' in which steady-state process model is of substantially identical structure to the second translation-layer process model 340. Alternately, a translation 306b" could be effected in which various units of the second translation-layer process model 340 are combined in order to yield the composition of the original steady-state process model 310. As may be appreciated with reference to FIG. 3, a translation approach which permits the applicable source application to determine the structure of the common process model(s) within the translation layer 308 may result in different forward and reverse translations, with introduces the possibility of hysteresis.

A second approach to defining the translations to and from the common process model(s) within the translation layer 308 affords less structural flexibility. In this approach the common process model(s) are structured so as to closely reflect a physically realizable arrangement of elements rather than to mimic the structure utilized by the applicable steady-state or dynamic simulation application. That is, in this second approach the assumed basis for the common process model(s) within the translation layer 308 is the physical configuration of the equipment included within the plant or process being modeled. Since an actual physical valve does not receive multiple feed streams and does not perform a phase separation upon exit, the second translation-layer process model 340 provides the only possible representation of a physically realizable collection of elements within the translation layer 308. Accordingly, this second approach to process model translation definition permits only a forward translation path 304a'/304b' using the translation-layer process model 340, and reverse path of either 306a/306b' or 306a/306b".

The employment of largely physically-based process models within the translation layer 308 provides certain collateral benefits. Among these is that a consistent basis is provided for making decisions with respect to the location (i.e., within the common process model(s) of the translation model or within the dynamic/steady-state models peculiar to simulation applications) of components. For example, consider the case in which it is desired to replace the valve in the process models of FIG. 3 with a component such as a heat exchanger, which may possess the same options for feeds and products as does such valve. In addition, assume that the heat exchanger comprises a condenser, and that it includes a bleed for non-condensable materials which has been modeled within the dynamic process model 330. Assume further that it is desired to translate this model into a format consistent with the steady-state process model 310. In this case various options exist for effecting this translation, a number of which are discussed below.

1. Maintain the second translation-layer process model 340 "as is", but add a separator to it (following the heat exchanger) during the translation 306a. The applicable steady-state simulation program could also potentially add component separators after the heat exchanger during the translation 306b.

2. Modify the steady-state process model 310 and the common process model 320 within the translation layer 308 to support bleed streams.

3. Maintain the steady-state process model 310 "as is" and modify the translation-layer process model 340 to support bleed streams. This will typically require that some equivalent approximation will need to be created within the steady-state simulation model 310. Since such approximations are specific to the applicable steady-state simulation program, this is most appropriately effected during the translation 306b. Such an approximation may comprise, for example, a heat exchanger followed by a component separator.

As is discussed below, the present invention may be utilized to provide a seamless import capability between steady-state and dynamic simulation programs. This permits importing of a process model for a flowsheet developed using a steady-state simulation program into a dynamic simulation environment, and vice-versa. In a particular implementation the steady-state simulation program 120 may comprise the Pro/II™ simulation application ("P2") and the dynamic simulation program 130 may comprise the DYNSIM™ simulation application, each of which are available from SimSci-Esscor™ unit of Invensys Systems, Inc.

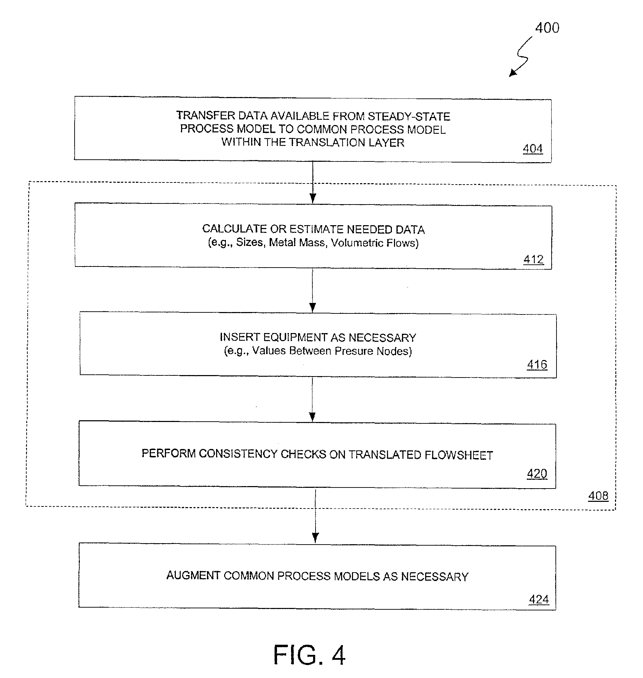

FIG. 4 is a flowchart which represents a process model translation process 400 consistent with one aspect of the present invention. Although the process 400 is described with reference to a translation of a process model associated with a steady-state flowsheet into a process model capable of being used to execute dynamic simulations, those skilled in the art will appreciate that the present invention is equally applicable to the reverse translation process. As shown, the steady-state simulation program will generally initiate the translation process by transferring data available within the steady-state process model to a common process model within the translation layer (step 404). Next, information inherent within the common process model is transferred to the dynamic process model configured to interface with a dynamic simulation program (step 408). As shown in FIG. 4, effecting the transfer 408 involves calculating or estimating data (e.g., sizes, metal mass, volumetric flows) needed by the dynamic simulation program (step 412). In addition, equipment is inserted into the common process model as necessary in connection with its transformation into the dynamic process model (step 416). Finally, consistency checks are performed upon the translated flowsheet corresponding to the dynamic process model (step 420) derived from the common process model. Once the transfer 408 has been completed, the common process model may be augmented or modified as necessary in response to changes in the process or plant structure being simulated.

**SYSTEM ENVIRONMENT**

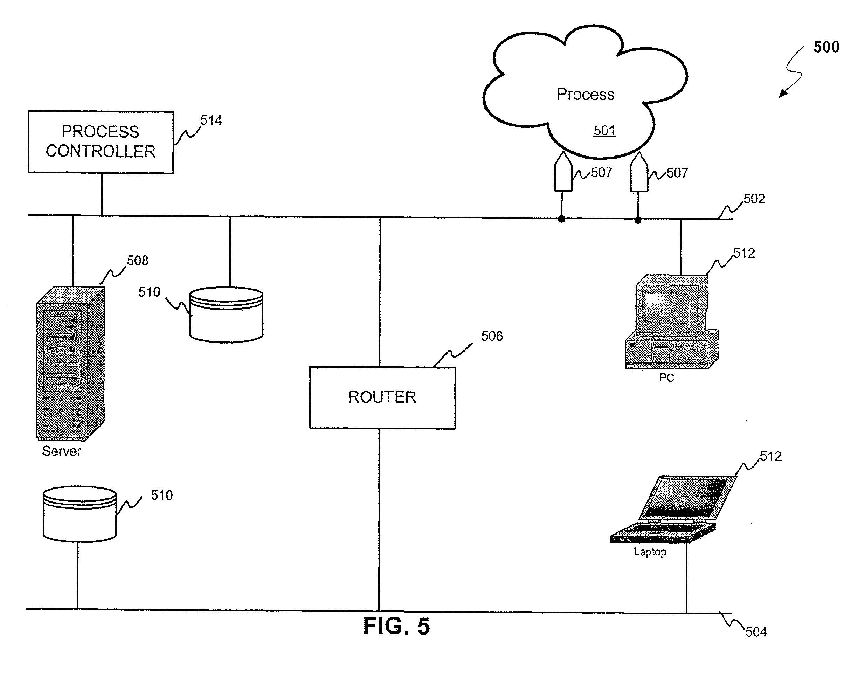

Turning now to FIG. 5, there is illustratively represented the network architecture of a system 500 within which one embodiment of the present invention may be incorporated. The system operates on a process 501, which may comprise any process including, without limitation, chemical processes, energy processes and distribution processes. In implementations involving chemical and other processes, the material in the process can be treated as a fluid that is moved within the process in streams. A process is normally made up of more than one unit of equipment, where each unit carries out some specific processing function, such as reaction, distillation, or heat exchange. Equipment units are interconnected and/or in fluid communication via streams. A plurality of plant sensors 507 are selected and configured to measure values of the regulatory variables applicable to the equipment units used to perform the process 501. These regulatory variables, e.g., pressure, temperature, level, and flow, are controlled to maintain process equipment operating at a designated stationary state. These variables may also be adjusted by the operator to move the process equipment to another stationary state (e.g., to increase production).

The system 500 may include a local area network (LAN) 502 that is connectable to other networks 104, including other LANs or portions of the Internet or an intranet, through a router 506 or similar mechanism. One example of such a LAN 502 may be a process control network to which process control devices, such as process controller 514, and plant sensors 507 are connected. Process control networks are well known in the art and are used to automate industrial tasks. The network 504 may be a corporate computing network, including possible access to the Internet, to which other computers and computing devices physically removed from the process 501 are connected. In one embodiment, the LANs 502, 504 conform to Transmission Control Protocol/Internet Protocol (TCP/IP) and Common Object Request Broker Architecture (COBRA) industry standards. In alternative embodiments, the LANs 502, 504 may conform to other network standards, including, but not limited to, the International Standards Organization's Open Systems Interconnection, IBM's SNA®, Novell's Netware®, and Banyon VINES®.

The system 500 includes a server 508 that is connected by network signal lines to one or more clients 512. In an exemplary embodiment the server 508 includes a UNIX or Windows NT-based operating system. The server 508 and clients 512 may be uniprocessor or multiprocessor machines, and may otherwise be configured in a wide variety of ways to operate consistent with the teachings of the present invention. The server 508 and clients 512 each include an addressable storage medium such as random access memory and may further include a nonvolatile storage medium such as a magnetic or an optical disk.

The system 500 also includes a storage medium 510 that is connected to the process control network 502 or corporate control network 504. In the exemplary embodiment the storage medium 510 may be configured as a database from which data can be both stored and retrieved. The storage medium 510 is accessible by devices, such as servers, clients, process controllers, and the like, connected to the process control network 502 or the corporate control network 504.

Suitable servers 508 and clients 512 include, without limitation, personal computers, laptops, and workstations. The signal lines may include twisted pair, coaxial, telephone lines, optical fiber cables, modulated AC power lines, satellites, and other data transmission media known to those of skill in the art. A given computer may function both as a server 508 and as a client 512. Alternatively, the server 508 may be connected to the other network 504 different from the LAN 502. Although particular computer systems and network components are shown, those of skill in the art will appreciate that the present invention also works with a variety of other networks and components.

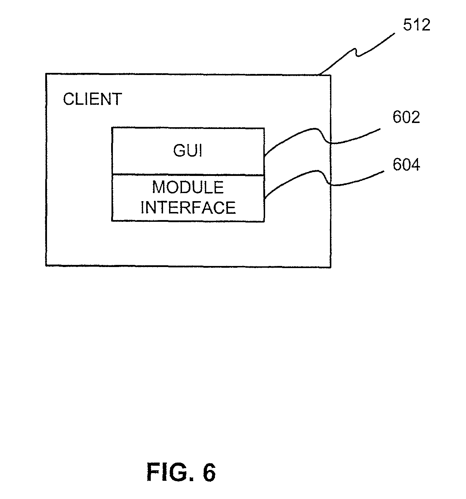

FIG. 6 illustrates an architecture of the client 512 which may be used with an embodiment of the present invention. The client 512 provides access to the functionality provided by the server 508. The client 512 includes a GUI 602 and an optional module interface 604. The Graphical User Interface (GUI) 602 is used to build and specify model applications. One embodiment of the GUI 602 incorporates user interface features such as tree views, drag-and-drop functionality, and tabbed windows to enhance the intuitiveness and usability of the interface. The GUI 602 further enables access to other encapsulated GUIs such as process unit GUIs, non-process unit GUIs, and stream GUIs as described below.

Access to the GUI 602, as well as other architectural objects to be discussed in detail below, are through the optional module interface 604. In one embodiment, the module interface 604 is the Interface Definition Language (IDL) as specified in the CORBA/IIOP 2.2 specification. In one embodiment, the module interface 604 provides a uniform interface to the architectural objects, such as the GUI 602. The module interface 604 allows the actual implementation of the architectural objects, such as the GUI 602, to be independent of the surrounding architecture, such as the operating system and network technology. One of ordinary skill in the art will recognize that the module interface 604 may conform to other standards, or even be non-existent.

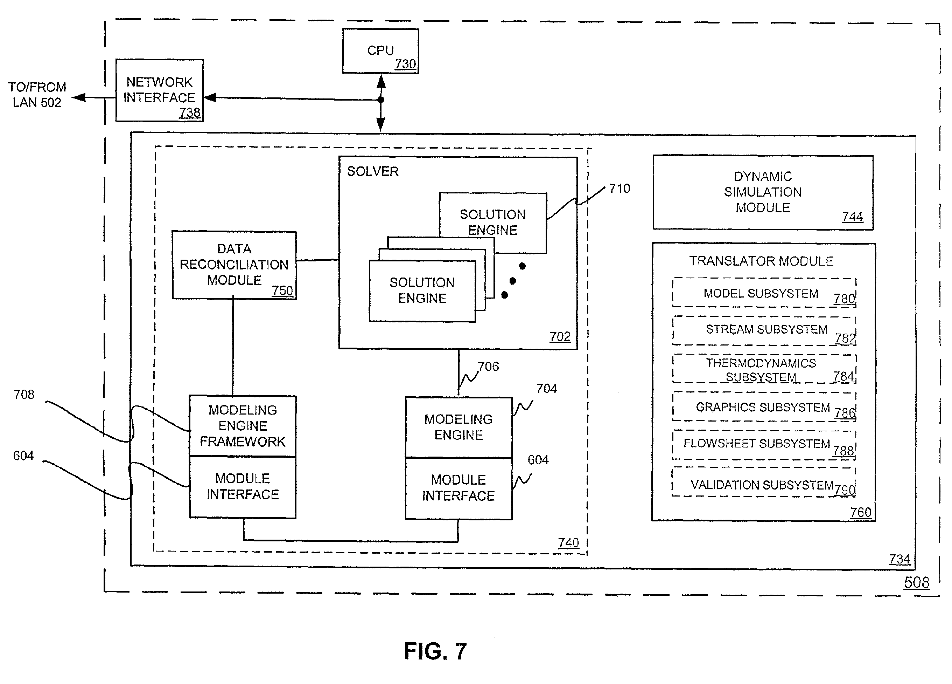

FIG. 7 is a block diagram representative of the internal architecture of the server 508, which may be physically implemented using a standard configuration of hardware elements. As shown, the server 508 includes a CPU 730, a memory 734, and a network interface 738 operatively connected to the LAN 502. The memory 734 stores a standard communication program (not shown) to realize standard network communications via the LAN 502. The memory 734 further stores a solver 702 accessible by a modeling engine 704 through an access mechanism 706, and a modeling engine framework 708. The solver 702, modeling engine 704, and modeling engine framework 708 collectively comprise a first simulation module 740 corresponding to the steady-state simulation program 120. A second simulation module 744 corresponding to the dynamic simulation program 130 is also included within the memory 734. The optional module interface 604 provides uniform access to, and implementation independence and modularity for both the modeling engine 704 and the modeling engine framework 708, as well as for equivalent elements within the second simulation module 744. As shown, the memory also stores a translator module 760 configured in accordance with the invention in the manner described below.

Referring again to FIG. 7, the modeling engine 704 of the first simulation module 740 provides an environment for building and solving process models. The solver 702 provides a solution algorithm for solving a process model generated by the underlying modeling engine 704. In one embodiment, the solver 702 may contain one or more solution engines 710 which are used in solving different process models. For example, one solver that may be used is Opera, a solver available from the Simulation Sciences unit of Invensys Systems, Inc. as part of the ROMeo System. In one embodiment, the solver 702 comprises a solution engine 710 implemented as a generalized matrix solver utilizing a Harwell subroutines. As is well known in the art, the Harwell library is an application independent library of mathematical subroutines used in solving complex mathematical equation sets. In one embodiment, the access mechanism 706 is specific to the solution engine 710 contained in the solver 702 and the modeling engine 704 used in generating the math model.

The modeling engine framework 708 is an interpretive layer providing user-friendly access to the modeling engine 704. In one embodiment, the modeling engine framework 708, working in conjunction with the GUI 602, provides a user the ability to add new unit models, modify existing unit models, and generally interact with the modeling engine 704 without having to know the specifics of the modeling engine 704.

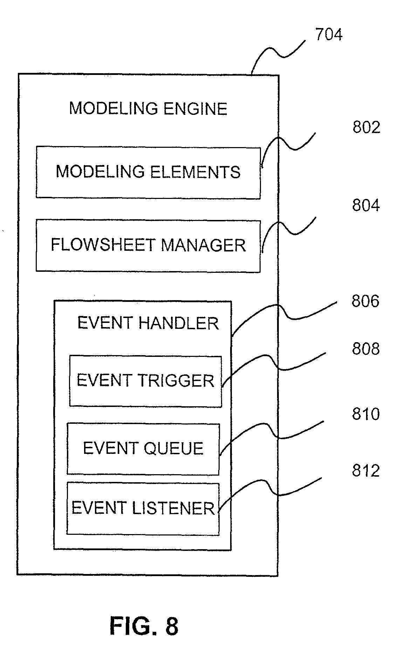

FIG. 8 further illustrates certain additional components comprising the modeling engine 704 in one preferred embodiment. The modeling engine 704 comprises model elements 802, a flowsheet manager 804, and an event handler 806. The model elements 802 include individual units and streams from which a user builds a flowsheet model. For example, a pump is a unit that the user may include in a flowsheet model.

A unit represents a device that may be found in a process plant. The unit may be a process or an on-process unit. A process unit is an item of operating hardware such as a heat exchanger, a compressor, an expander, a firebox, a pipe, a splitter, a pump, and the like. As mentioned above, each unit is represented by a generally nonlinear model characterized by one or more parameters. Each parameter of a given model will typically pertain to mass or energy transfer characteristics of the equipment unit represented by the model. Some or all of these parameters may be considered maintenance parameters, and will generally be considered as such to the extent that monitoring the changes in their respective values over time may enable inference of the condition of the applicable unit of equipment.

A non-process unit is something other than an item of operating hardware. For example, a non-process unit may be a penalty. A penalty unit assigns a progressively increasing weight to a measured output temperature value beyond the optimum output temperature. For example, the penalty unit may account for the increased cleanup costs associated with operating the furnace at a higher than optimum output temperature. Another example of a non-process unit may be a measurement from measuring devices such as flow meters, thermocouples, and pressure gauges.

In one embodiment, each unit typically has one or more entry or exit ports and is associated with a model. The model is a collection of variables and equations, collectively known as a calculation block. A unit model represents the operation of the unit in terms of its associated calculation block. As an example, an equation for a measurement unit may be:

$$ModelVariable - Scan - Offset == 0$$

where ModelVariable is a calculated value, Scan is a measured value, and Offset is the difference between ModelVariable and Scan. The above equation contains three variables: ModelVariable, Scan and Offset.

As another example, the equations for a pump unit may be:

$$PresRise - Product{:}Pres + Feed{:}Pres == 0,$$

and

$$Head * GravConst * Feed{:}Prop["WtDens"] - 1000 * PresRise == 0$$

where PresRise is a rise in pressure, Product:Pres is an output pressure, Feed:Pres is an input pressure, Head is a liquid height within a tank connected to the pump, GravConst is the gravity constant, Feed:Prop["WtDens"] is a weight density of the liquid in the tank, and the PresRise is a rise in pressure of the pump. In the first equation, PresRise, Prod:Pres, and Feed:Pres are variables. In the second equation, Head, Feed:Prop["WtDens"], and PresRise are variables. GravConst is a parameter, and thus requires a value to be assigned before the equation may be solved.

A stream is used to connect a unit's entry or exit port to another unit's exit or entry port respectively. Furthermore, a feed stream is connected to the unit's entry port, whereas a product stream is connected to the unit's exit port. A stream model may have associated equations and variables. For example, a simplified stream model may be represented as follows:

$$y=ax+b$$

where "y" is a measurement that is allowed to assume values within a predefined range, and "x", "a" and "b" are parameters representative of equipment condition (i.e., "a" and "b" will generally change over time due to equipment wear), and "x" is a calculated value. During the reconciliation operation, the values of "y", "a" and "b" and similar values within all other equipment models of the applicable process are allowed to change until the overall process model reflects that mass and energy balance has been achieved throughout the process.

In one exemplary embodiment, multi-dimensional data structures are used to store individual units and streams, and their associated variables and equations. The data structures may also store other information such as, but not limited to, the type of unit or stream, whether a variable requires a user-provided value, the variable's lower bound, upper bound, solution value, or status. One of ordinary skill in the art will recognize that the data structures may be in the form of an array, linked list, or as elements within other data structures.

The flowsheet manager 804 provides access to instances of unit models, stream models, and other information associated with a flowsheet model. In the exemplary embodiment the steady-state process model database 140 is stored in the storage medium 510. The flowsheet manager 804 may then communicate with the model 140 within the storage medium 510 to provide a user access to the information contained therein in a manageable format. Further details regarding creation, modification and alteration of flowsheet models are provided in, for example, copending U. S. Patent Application Serial No. 09/193,414, filed November 17, 1998 and entitled INTERACTIVE PROCESS MODELING SYSTEM; U.S. Patent No. 6,442,515, which is entitled PROCESS MODEL GENERATION INDEPENDENT OF APPLICATION MODE; and U.S. Patent No. 6,323,882, which is entitled METHOD AND SYSTEMS FOR A GRAPHICAL REAL TIME FLOW TASK SCHEDULER, each of which is hereby incorporated by reference in its entirety.

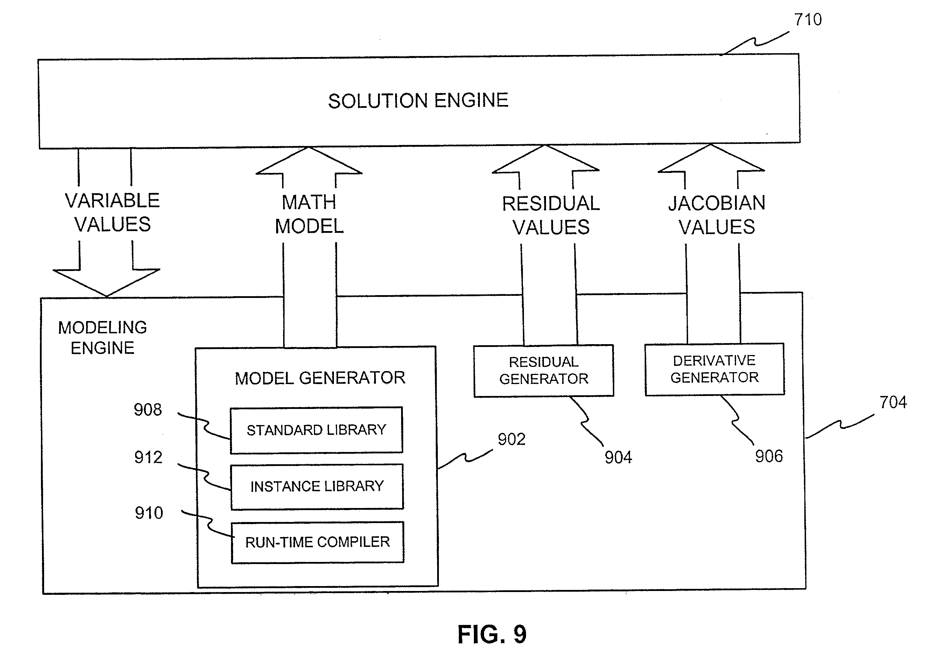

FIG. 9 further illustrates one embodiment of the interaction between the modeling engine 704 and the solution engine 710 of the simulation module 740. As is described in the above copending patent applications, the modeling engine 704 additionally comprises a model generator 902, a residual generator 904, and a derivative generator 906. The modeling engine 704 provides the open form of model equations to the solution engine 710. The solution engine 710, in turn, solves the equations. In an alternative embodiment, a closed form of the model equations may be provided by the modeling engine 704.

The model generator 902 creates a math model of the flowsheet for input to the solution engine 710. In the exemplary embodiment, the math model is a large set of equations and variables that comprehensively models all or part of the process 501. The math model will typically be in the form of a matrix which represents the equations contained in the flowsheet model in the form $f(x)=0$. Standard equations and variables associated with a corresponding unit model or stream model are provided in a previously compiled standard library 908. The equations may comprise mass, material, equilibrium, thermodynamic, and physical property related equations applicable to all or part of the process 501.

## TRANSLATION-LAYER ARCHITECTURE

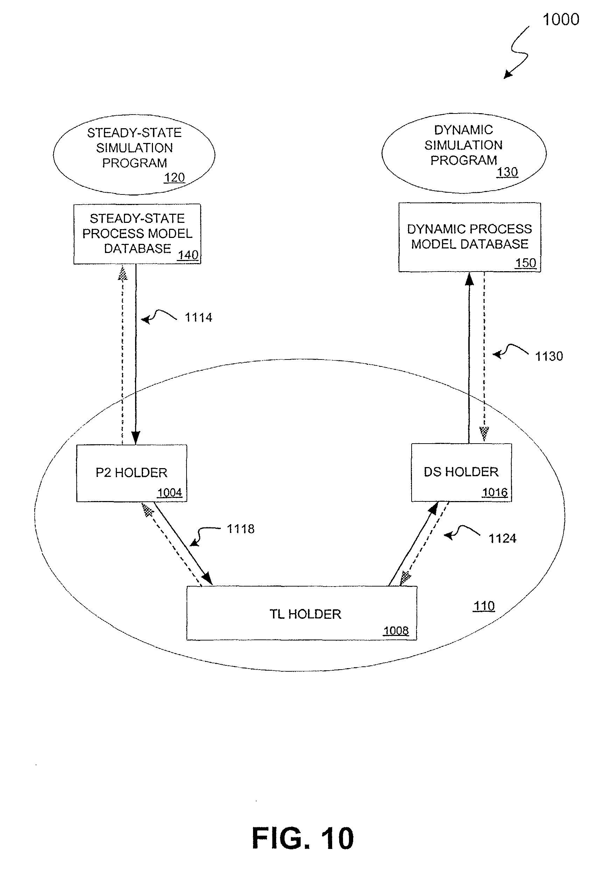

Turning now to FIG. 10, there is shown a high-level architecture of a software simulation environment 1000 containing a more detailed representation of a translation-layer common process model 110 of the present invention. As shown, the common process model 110 includes a holder 1004 ("P2 holder") of objects corresponding to the equipment models included within the steady-state process model database 140. During the model translation process, information relating to these equipment models is loaded into corresponding objects within the P2 holder 1004. As is discussed in further detail below, the objects within the P2 holder 1004 are reviewed following completion of a validation operation in order to determine which common process model objects 1008 should be used for mapping. In the exemplary embodiment each object within the P2 holder 1004 is mapped into one or more common process model units contained within a translation-layer object holder 1008 ("TL holder"). When a single such object is mapped into multiple common process model units, a common group of such units is established. This common group may be identified by an identification number or defined as a composite unit, which may facilitate the exporting of flowsheets from the steady-state simulation program 120 to the dynamic simulation program 130. A second pass review will evaluate if any additional common process model units may need to be inserted for proper dynamic simulation.

The common process model 110 also includes a holder 1016 of dynamic simulation objects ("DS holder") corresponding to the equipment models included within the dynamic process model database 150. Since in the embodiment of FIG. 10 the common process model units within the TL holder 1008 comprise the smallest units of interest, the mapping from these units to objects within the DS holder 1016 will therefore include one to one mapping or combining of multiple common process model units into a single object within the DS holder 1016.

Referring again to FIG. 7, an overview description is provided of the subsystem components of the translator module 760 of the present invention. As shown, the translator module 760 includes a model subsystem 780, streams subsystem 782, thermodynamics subsystem 784, graphics subsystem 786, flowsheet subsystem 788, and validation subsystem 790.

The model subsystem 780 is disposed to handle the equipment models specified in the flowsheet produced by the steady-state simulator program 120. Specifically, the subsystem 780 will determine the number of units represented in the steady-state process model database 140. It will then transfer all such units from the steady-state process model database 140 into corresponding objects within the P2 holder 1004. If the framework does not support a particular unit, an error will be issued. The subsystem 780 will then either notify the user and terminate or log the error and continue. Once all of the units have been placed into corresponding holder objects within the P2 holder 1004, the subsystem 780 will notify the validation subsystem 790 so as to cause a validation operation to be performed. The validation subsystem 790 will check for incomplete or inconsistent input (e.g., two consecutive units with the same or increasing pressure). If the validation operation performed by the validation subsystem 790 is unsuccessful, an error message is generated.

Once the validation subsystem 790 successfully completes the above validation operation, the model subsystem 780 will review the objects within the P2 holder 1004 and determine which common process model objects within the TL holder 1008 should be used for mapping. As was mentioned above, each object within the P2 holder 1004 unit may be mapped into one or more common process model units contained within the TL holder 1008. Once any additional common process model units have been inserted in order to ensure proper dynamic simulation, all the inserted units and the "original" common process model units between which they are inserted are logged for use by the streams subsystem 782 and the graphics subsystem 786.

The streams subsystem 782 is designed to perform three main tasks. First, all of the streams defined within the steady-state process model database 140 are read and their associated data, including connectivity information, is stored. In the exemplary embodiment stream objects represented within the P2 holder 140 will generally map in a one-to-one manner to corresponding objects within the DS holder 1016. Any streams not connected at a source must create a source model and set that as the stream source point. A source created in this way must also be initialized properly using the stream data. If the stream includes assay data, it must be translated appropriately in terms of pseudo-component compositions to be set on the source. It may be necessary to access the thermodynamics subsystem 784 to handle assay information.

If the model subsystem 780 has logged any newly-created common process model units, it is possible that it may have create additional streams to connect these newly-created units. In the exemplary embodiment the names of these streams are derived from the stream that connected to the original common process model units. The component and thermodynamics slates of the newly-created streams would need to be consistent across the connected units.

The thermodynamics subsystem 784 performs various thermodynamics evaluations on the basis of slates of equipment components and methods utilized by the steady-state simulation program 120. In embodiments in which the steady-state simulation program 120 comprises the Pro/II program identified above, a single component slate and a method slate are specified for each equipment unit present within the applicable steady-state flowsheet. The thermodynamics subsystem 784 first gathers information from the steady-state flowsheet concerning the defined components and methods. It will then create method slates, one corresponding to each method slate used by the steady-state simulation program 120. A single component slate corresponding to the slate defined by the steady-state simulation program 120 is also created. Since the size of component slate can adversely affect the performance of the dynamic simulation program 130, in certain implementations it may be beneficial to split the component slates and thereby form multiple slates for use in different parts of a flowsheet. The thermodynamics subsystem 784 may also review the composition to check if a component has a zero or insignificant composition throughout the flowsheet. In this case, user may be notified and offered removal of that component from the component slate. Finally, the thermodynamics subsystem 784 may also be configured to assist the stream subsystem 782 in using the assay information in the stream data.

The graphics subsystem 786 is concerned with translation of the graphical aspects of a given flowsheet. During operation, the graphics subsystem 786 reads data from the steady-state process model database 140 in order to determine the relative locations of the equipment units. It then uses this information to set the same information within the graphics portion of the dynamic process model database 150. The graphics subsystem 786 will also review the inserted models logged by the model subsystem 780. Using the graphics information on the original units of insertion, it will specify the relative locations (or hints) for the newly inserted units.

The flowsheet subsystem 788 is disposed handle all the tasks that are not handled by any specific subsystem. This may include setting units from block diagrams to be set for export to different flowsheets, getting and setting information on trends and profiles, any user preferences that can be globally supported, and flowsheet solution status.

The validation subsystem 790 is configured to provide consistency and error checking for various parts of the flowsheet data and in the various stages of mapping. Inconsistencies may include unsupported units, unsupported thermodynamics options, increasing pressure in the flow direction (e.g., when there is no pump, compressor or similar equipment), and the existence of two pressure-node equipment units next to each other.

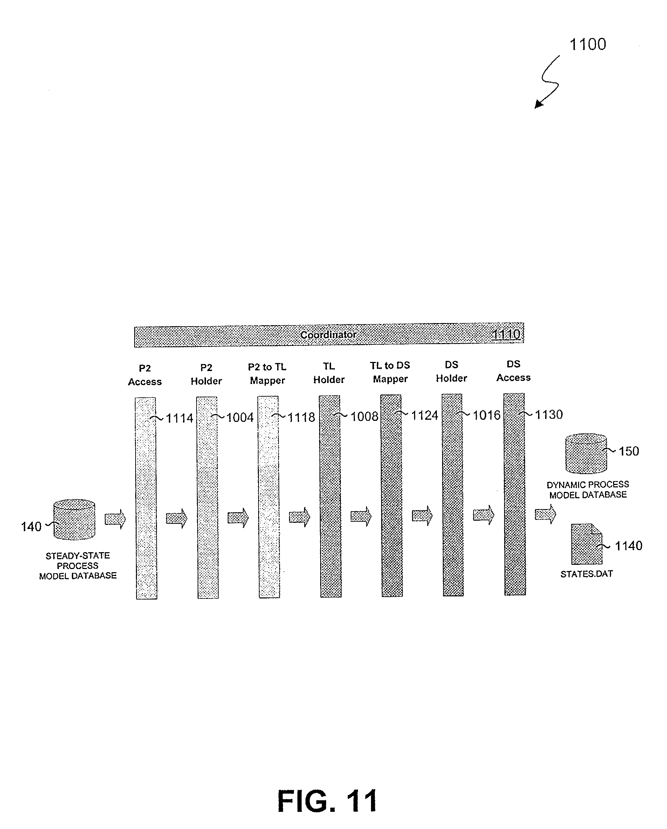

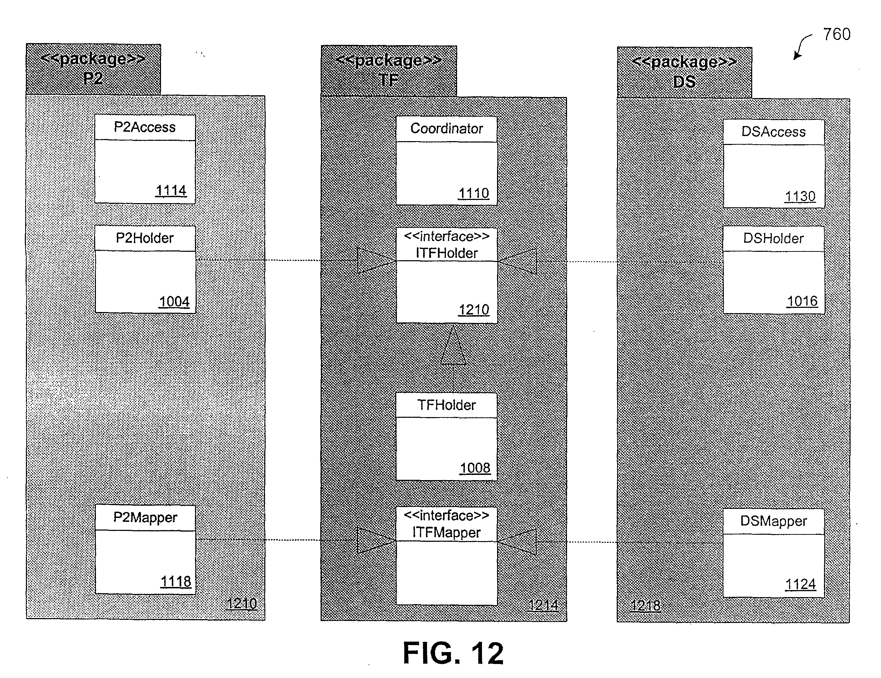

FIG. 11 provides a high-level representation 1100 of the elements involved in translating a steady-state process model database 140 into a dynamic process model database 150 in a manner consistent with the present invention. As shown, the representation includes a coordinator object 1110 representative of the translator engine, base classes, and common utilities of the translator module 760. The coordinator object 1110 is responsible for driving the entire translation process. A P2 Access object 1114 includes a number of common utilities for accessing information from the steady-state process model database 140 via a predefined interface. The P2 holder 1004 contains a common set of classes and objects (inherited from the standard abstract base class ITFHolder 1210 of FIG. 12) used to hold simulation data in memory 510 using a data schema (classes and attribute names) specific to the steady-state simulation program 120. Access to this data is through a common interface (ITFHolder 1210), allowing easy interaction with the remainder of the subsystems within the translator module 760.

As shown in FIG. 11, the data within the P2 holder 1004 is operated upon by a P2 mapper 1118. In the exemplary embodiment the P2 mapper 1118 comprises a set of custom classes (inherited from the base class TFMapper, discussed below) used to specifically translate the unit operations (and other objects) stored within the P2 holder 1004 into the common process model objects maintained within the TL holder 1008. More specifically, the TL holder 1008 comprises a common set of classes and objects (inherited from the standard abstract base class ITFHolder 1210) used to hold simulation data in memory using a "Translation Layer"-specific data schema (classes and attribute names). Access to this data is also through the common interface ITFHolder 1210. A DS mapper 1124 comprises a set of custom classes (all inherited from the base class TFMapper, discussed below) used to specifically translate the unit operations (and other objects) from the "Translation Layer" common process model into a process model specific to the dynamic simulation program 130. The DS holder 1016 is comprised of a common set of classes and objects (inherited from the standard abstract base class ITFHolder 1210) used to hold simulation data in memory using a data schema (classes and attribute names) specific to the dynamic simulation program 130. Access 1130 to this data is also through the common interface ITFHolder 1210. Finally, dynamic process information that is used to define the initial conditions of the dynamic simulation effected by the dynamic simulation program 130 is stored within a STATES. DAT file 1140.

Referring now to FIG. 12, a simplified overview is provided of the logical relationship between the primary packages and classes comprising an exemplary implementation of the translator module 760. In FIG. 12, a "package" is intended to refer to a DLL or to an EXE file. As shown, the packages included within the translator module 760 include a Pro/II ("P2") package 1210, a Translation Framework ("TF") package 1214 and a Dynamic Simulation ("DS") package 1218. The packages and classes illustratively represented in FIG. 12 may be classified on the basis of whether they include only "generic" elements not associated with a given simulation application or contain global functions and utilities for a particular product. The contents of the TF package 1214 are generic and not associated with a specific simulation application. That is, in the exemplary embodiment there are no header file or link-time dependencies from the TF package 1214 to either the steady-state simulation program 120 or the dynamic simulation program 130. In contrast to the TF package 1214, the P2 package 1210 is associated with the steady-state simulation program 120 and the DS package 1218 is associated with the dynamic simulation program 130.

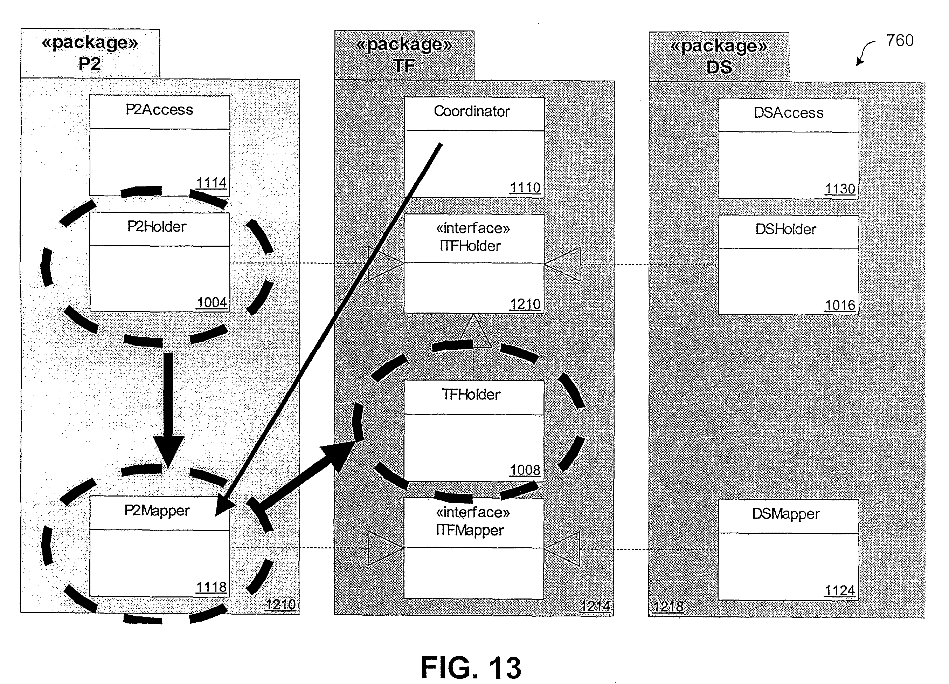

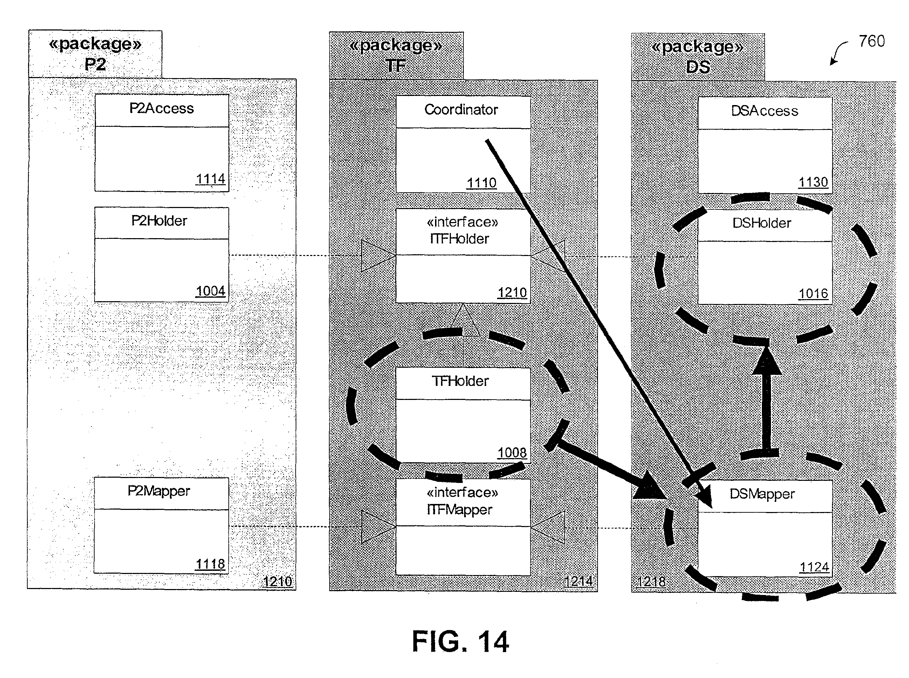

FIGS. 13 and 14 respectively illustrate the mapping operations performed using the P2 mapper 1118 and the DS mapper 1124.

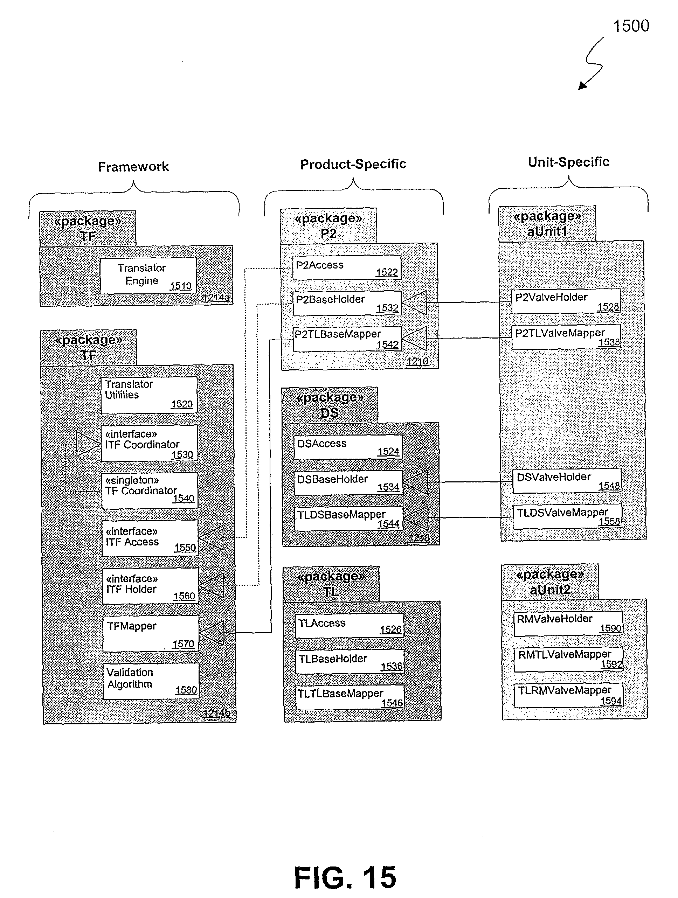

Turning now to FIG. 15, a more detailed representation 1500 is provided of the logical relationship between the primary packages and classes comprising an exemplary implementation of the translator module 760. Similar to FIGS. 12-14, the packages and classes illustratively represented in FIG. 12 may be classified on the basis of whether they include only "generic" elements not associated with a given simulation application, global functions and utilities for a particular product, or are applicable to one or more specific unit operations. A brief description of each of the components illustrated in the logical view of FIG. 15 is provided below.

## TRANSLATION FRAMEWORK ("TF") PACKAGE

**Translator Engine 1510** — represents the top-level driver for the translator module 760, and will be the main .

exe file.

**Translator Utilities** 1520 - includes common utilities and base classes used by the translator engine 1510; the other packages "P2", "DS", "TL"; and the unit-specific packages. These utilities will be distributed as a single DLL.

**ITFCoordinator 1530-** the abstract base class defining the functional interface to the single coordinator object. An abstract base class is used to reduce link-time dependencies between the different DLL and EXE components of the Translator Engine 1510. The engine-specific and unit-specific layers may save references to this pointer.

**TFCoordinator 1540-** the singleton class which is the "Coordinator" object. It inherits from ITFCoordinator 1530. The coordinator is responsible for driving the entire translation process through its various stages. In the exemplary embodiment the pointer of the TFCoordinator 1540 should not itself be used directly in the engine-specific DLLs or the unit-specific DLLs. Instead, those layers should use the abstract base class ITFCoordinator 1530. The purpose of this is to reduce compile and link-time dependencies between the DLLs in the Translator Engine 1510.

**ITFAccess 1550 -** the abstract base class defining the functional interface to product-specific access DLLs.

**ITFHolder 1560-** the abstract base class defining the functional interface to holder objects. Generic holder objects are used to transiently hold process simulation data in memory in a variety of engine-specific schemas. In general, a holder object has several maps of name/value pairs of data. A simplified interface to name/value pairs provides consistent data access for all the various products during the translation process.

**TFMapper 1570-** Note that this is a base class, not an interface like the others. This object serves both as the base class for all unit operation mapper classes in the system, and it also has some common utility base methods used during the step of mapping attributes from the source object to the destination object. Two important operations defined by this base class are mapUnit() and mapAttributes().

**Validation Algorithm 1580 -** represents the common utilities and/or classes for performing validation on the translated simulation data.

**P2 PACKAGE**

**P2Access 1522-** inherited from ITFAccess, this class contains the common utilities for interacting with the COM interface of PRO/II (P2OLEDBS) and extracting data.

**P2BaseHolder 1532 -** inherited from ITFHolder, this class is used for two purposes. First, it serves as the base class for more specific unit-operation holder objects and contains the common implementation for P2Holder objects for all unit operations. (In fact, all P2Holder objects for every unit operation are instances of this class.) Second, a single instance of this specific class is used as a "container" object to manage all of the individual holder objects for the steady-state simulation.

**P2TLBaseMapper 1542-** inherited from TFMapper, this class is used for two purposes. First, it serves as the base class for unit-specific mapper classes from the steady-state simulation environment to the Translation Layer. Second, a single instance of this specific class is used (by calling the getUnitMapper(const char *unitClass) method) to access the specific derived class mapper for a specific unit operation class.

**DS PACKAGE**

**DSAccess 1524-** inherited from ITFAccess, this class contains the common utilities for interacting with the CORBA interface of external programs and saving data to the database and the states.dat file.

**DSBaseHolder 1534-** inherited from ITFHolder, this class is used for two purposes. First, it serves as the base class for more specific unit-operation holder objects and contains the common implementation for DSHolder objects for all unit operations. (In fact, in the exemplary embodiment all DSHolder objects for every unit operation are instances of this class.) Second, a single instance of this specific class is used as a "container" object to manage all of the individual holder objects for the dynamic simulation program 130.

**TLDSBaseMapper 1544-** inherited from TFMapper, this class is used for two purposes. First, it serves as the base class for unit-specific mapper classes from the Translation Layer to the dynamic simulation environment. Second, a single instance of this specific class is used (by calling the getUnitMapper(const char *unitClass) method) to access the specific derived class mapper for a specific unit operation class.

**TRANSLATION LAYER ("TL") PACKAGE**

**TLAccess 1526 -** inherited from ITFAccess, this class contains the common utilities for interacting with the "translation layer" data model used during translation.

**TLBaseHolder 1536-** inherited from ITFHolder, this class is used for two purposes. First, it serves as the base class for more specific unit-operation holder objects and contains the common implementation for TLHolder objects for all unit operations. (In fact, all TLHolder objects for every unit operation are instances of this class). Second, a single instance of this specific class is used as a "container" object to manage all of the individual holder objects for the translation layer.

**TLTLBaseMapper 1546-** inherited from TFMapper, this class is used for two purposes. First, it serves as the base class for unit-specific mapper classes from the Translation Layer to other objects in the same Translation Layer. Second, a single instance of this specific class is used (by calling the getUnitMapper(const char *unitClass) method) to access the specific derived class mapper for a specific unit operation class. In the exemplary embodiment "TL-TL" mapper objects are utilized when "new" unit operations are introduced during the validation process. As was discussed above, the translator module 760 may need to add new unit operations to a given flowsheet being translated from a steady-state to a dynamic simulation environment (e.g., adding a valve between two pressure nodes). In this example, the new valve must be initialized and therefore requires a mapper object to map attributes from the already-existing units/streams to the new valve unit. Since all these operations are being performed on the "TL" data model, it results in a "TL-TL" mapper being used to map a TL stream to a TL valve.

## PACKAGE "AUNIT1"

This package represents one method of bundling one or more unit operation mappers into a single DLL. In this particular example, it is assumed that all of the specific holder and mapper classes for the "Valve" for the steady-state and dynamic simulation programs have been combined into a single DLL. In commercial implementations, it is expected that steady-state and dynamic simulation classes for several unit operations will be combined into a single DLL. Some of the more complex unit operations may be broken out into their individual DLLs to allow easier updates and fixes.

**P2ValveHolder 1528-** this is shown as an actual class inherited from P2BaseHolder, but in fact this is actually an instance of P2BaseHolder which has been initialized with specific name/value attribute data for the valve. The other unit operations will be handled this way — they will not have individual C++ classes but will be instances of the P2BaseHolder class. (Of course, if a specific unit operation requires more complex handling, it may be implemented as a separate class inheriting from P2BaseHolder.)

**P2TLValveMapper 1538-** this is the actual mapper class for the valve from the steady-state schema to the "Translation Layer" schema. It has actual implementations for the two basic mapping operations: mapUnit() and mapAttributes().

**DSValveHolder 1548** — this is shown as an actual class inherited from DSBaseHolder, but in fact this is actually an instance of DSBaseHolder which has been initialized with specific name/value attribute data for the valve. The other unit operations will be handled this way - they will not have individual C++ classes but will be instances of the DSBaseHolder class. (Of course, if a specific unit operation requires more complex handling, it may be implemented as a separate class inheriting from P2BaseHolder.)

**TLDSValveMapper 1558-** this is the actual mapper class for the valve from the "Translation Layer" schema to the dynamic simulation schema. It has actual implementations for the two basic mapping operations: mapUnit() and mapAttributes().

## PACKAGE "AUNIT2"

This package represents an alternate method of bundling one or more unit operation mappers into a single DLL. In this particular example, it is assumed that all of the specific holder and mapper classes for translation of the "Valve" from the "Translation Layer" to/from the steady-state simulation environment have been combined into a single DLL.

**RMValveHolder 1590-** this is shown as an actual class inherited from RMBaseHolder (not shown in the diagram), but in fact this is actually an instance of RMBaseHolder which has been initialized with specific name/value attribute data for the valve. The other unit operations will be handled this way — they will not have individual C++ classes but will be instances of the RMBaseHolder class. (Of course, if a specific unit operation requires more complex handling, it may be implemented as a separate class inheriting from RMBaseHolder.)

**RMTLValveMapper 1592-** this is the actual mapper class for the valve from the steady-state simulation schema to the "Translation Layer" schema. It has actual implementations for the two basic mapping operations: mapUnit() and mapAttributes().

**TLRMValveMapper 1594-** this is the actual mapper class for the valve from the "Translation Layer" schema to the steady-state simulation schema. It has actual implementations for the two basic mapping operations: mapUnit() and mapAttributes().

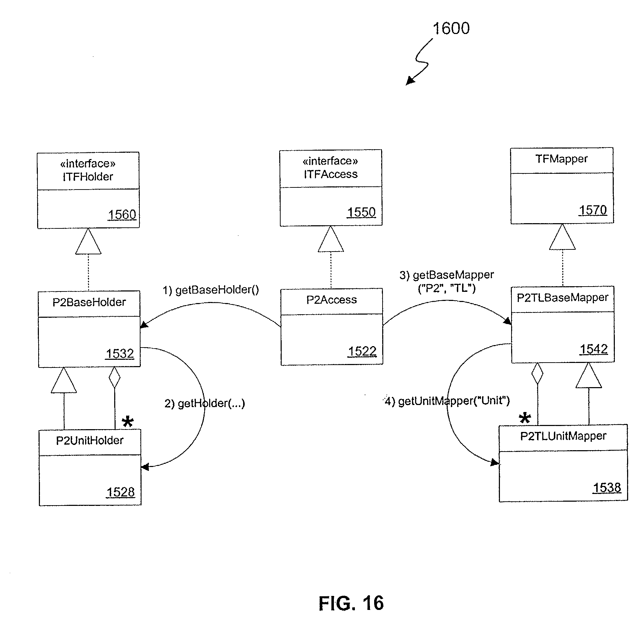

FIG. 16 is a flow diagram 1600 representative of the manner in which specific holder and mapper objects are accessed from P2Access object 1522. Although FIG. 16 reflects an approach specific to the Pro/II product referenced above, similar logic may be utilized when other steady-state simulation programs are employed.

The flow diagram 1600 illustrates the flexibility afforded by the layered approach characterizing embodiments of the invention. In particular, connection to a given modeling system is facilitated by three system-specific modules: the access object 1522, unit holders 1528, 1532 and unit mappers 1538, 1542. The access object 1522 allows model information to be retrieved from the source modeling system and deposited with the target modeling system, irrespective of the archival medium (text, xml, database, binary). Unit holders are disposed to hold model data in the source/target system specific format. Unit mappers are configured to translate the data in the unit holders to/from the common layer holders. In order to enable this translation to occur in an environment including such dissimilar system-specific modules, measures are taken to effectively standardize the interfaces of such modules. This is illustrated by FIG. 16, which depicts the relationship between the translation system and these modules established through various interface definitions. Specifically, the unit holders provide the ITFHolder interface 1560 and the access modules provide the ITFAccess interface 1550. Unit mappers use a slightly different structure in the form of an abstract base class TFMapper 1570.

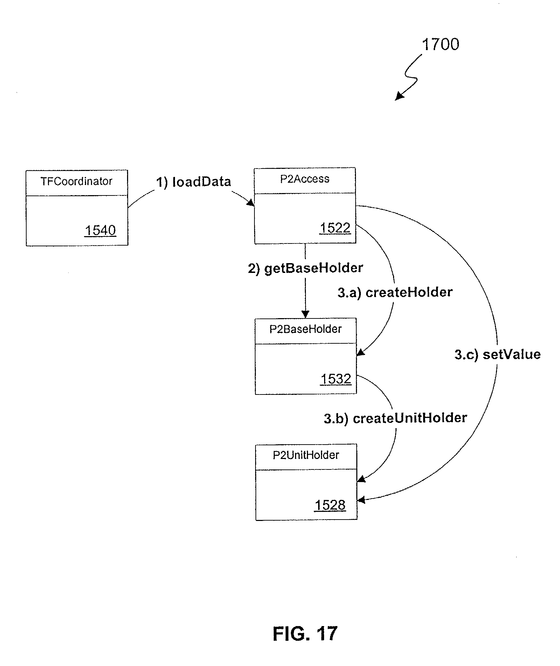

FIG. 17 is a flow diagram 1700 illustrating execution of an exemplary startup sequence and loading of steady-state simulation data performed during initiation of a flowsheet translation operation consistent with the invention. In particular, FIG. 17 depicts an exemplary process of loading source modeling system data into system-specific unit holders. In the flow diagram 1700 of FIG. 17, TFCoordinator 1540 functions as the "traffic manager" of the system. Based on the nature of the relevant configuration files, TFCoordinator 1540 is able to recognize the source modeling system. Provided that this source system is available in the currently running instance, the appropriate access module 1522 is requested to load the archived data. When TFCoordinator 1540 encounters a unit (e.g., a process unit, thermodynamic unit, or control unit) it requests creation of the appropriate unit holder by specifying the unit type (e.g. valve, stream, reactor, component, etc.). Conformance to ITFHolder 1560 allows this interaction to occur. Once the appropriate unit holder is successfully created, the access module reads the unit configuration attributes and sends it to the unit holder as attribute name, type and value through the setValue() function. Once all the attributes have been successfully read, the access module 1522 moves on to the next unit configuration, if present.

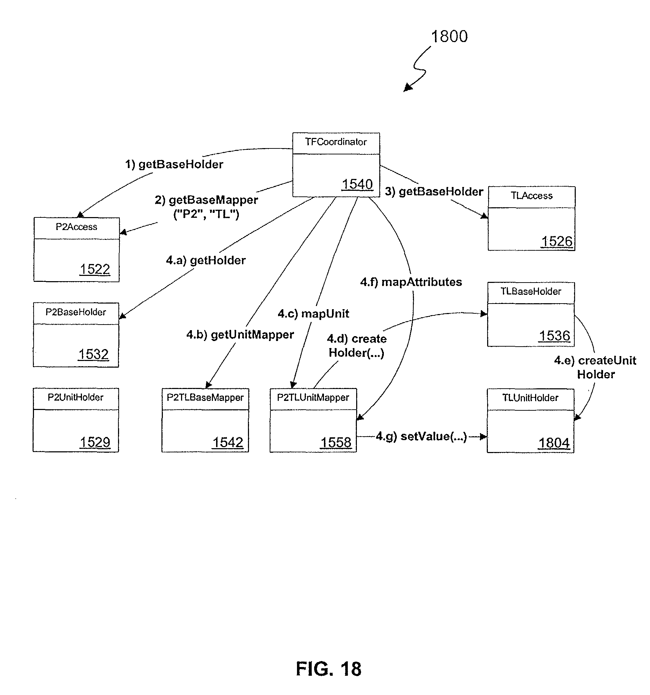

Turning now to FIG. 18, there is shown a flow diagram 1800 representative of the translation of P2 steady-state simulation data into translation-layer (TL) information. A corresponding flow of events is provided below.

<u>Flow of Events for Translation of P2 Data to TL Data</u>

1.  Start Translation Engine
2.  Engine receives IDL call startTranslation() with source and destination products in the argument list.
3.  Opens product*.ini, which has table of product DLLs. For the two products listed in the argument list, get the DLL information from product.ini
    a.  Load library
    b.  Tf=GetProcAddress("getTFAccess");
    c.  Gives table of product name vs. ITFAccess function pointer
    d.  For each ITFAccess* (i.e., P2Access* and DSAccess* ),call
        tfAccess_p->initialize( ITFCoordinator* this );
         will create base holder and base mapper and product specific things.  Worry about ModThermo and DynSim needing a simulation name.  Might need to use Coordinator::getInputName() for this.  Put MTS* into the Coordinator.  Else through error
4.  Transfer from data origin into its product-specific holders
    For Source ITFAccess* (i.e., P2Access*), call p2Access_p->loadData( inputName );

```
P2Access::loadData( input Name )
{
  pP2BH = getBaseHolder();
  //Loop over vector in baseHolder
  {
    pP2H = pP2BH->getHolder( p2Obj.className() );
    // Loop over attributes
    {
      pP2H->setAttribute( p2Obj.curAtrName,
                          p2Obj.curAtrValue );
    }
  }
}
```

5.  Transfer from origin-holders to TL holders
    Iterate through all the holders and map

```
// BaseHolder class will support size(), getHolder( int )
// and getHolder( std::string)
ITFHolder pP2BH = p2Access->getBaseHolder( );
ITFHolder pTLBH = tfAccess->getBaseHolder();
for(i=0; i<pP2BH->p2HolderVector.size(); i++)
{
  ITFHolder *pP2H = pP2BH->getHolder(i);
  GETMAPPERFCN fp = p2Access->getMapper("P2","TL");
  ITFMapper* pUnitMap = fp(pP2H->getClassName());
  pUnitMap->mapUnit(pP2H, pTLBH);

  // See detail below for mapAttributes!
  pUnitMap->mapAttributes( );
}
```

where:

```
ITFMapper* ITAccess::GetMapper( source, dest )
{
  if(source==P2) || if(dest==TL)
  {
    return P2TLMap::getUnitMapper();
  }
  else if (source==TL) || if(dest==P2)
  {
    return TLP2Map::getUnitMapper();
  }
  else
  {
    send error;
```

```
    }
  }
```

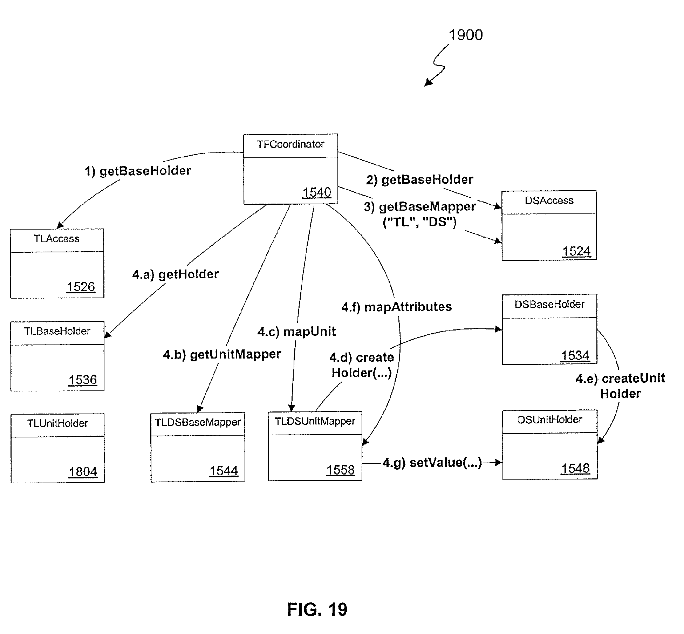

FIG. 19 depicts a flow diagram 1900 representative of the translation of translation-layer (TL) process model data into dynamic simulation model data. A corresponding flow of events is provided below.

Flow of Events for Translation of TL Data to DS Data

1. Transfer TL data to destination data model (in this case, DYNSIM)

```
pDSBH = dsAccess_p->getBaseHolder();
pTLBH = tfAccess_p->getBaseHolder();
for (i=0;  i<pTLBH.size(), i++)
{
  ITFHolder* pTLH = pTLBH->getHolder( i );
  GETMAPPERFCN   fp = dsAccess->getMapper("TL", "DS");
  ITFMapper *pUnitMap = fp(pTLH->getClassName());
  pUnitMap->mapUnit(pTLH, pDSBH);

  // See detail below for mapAttributes!
  pUnitMap->mapAttributes();
}
```

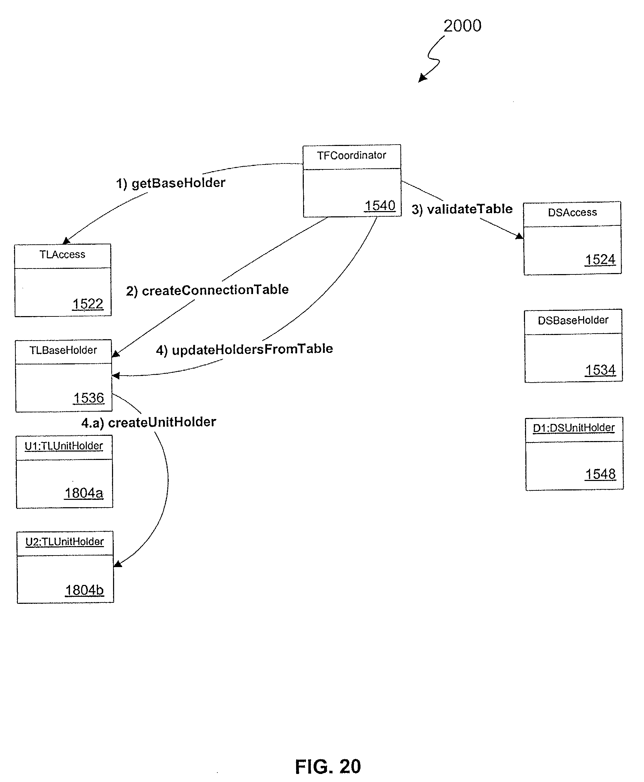

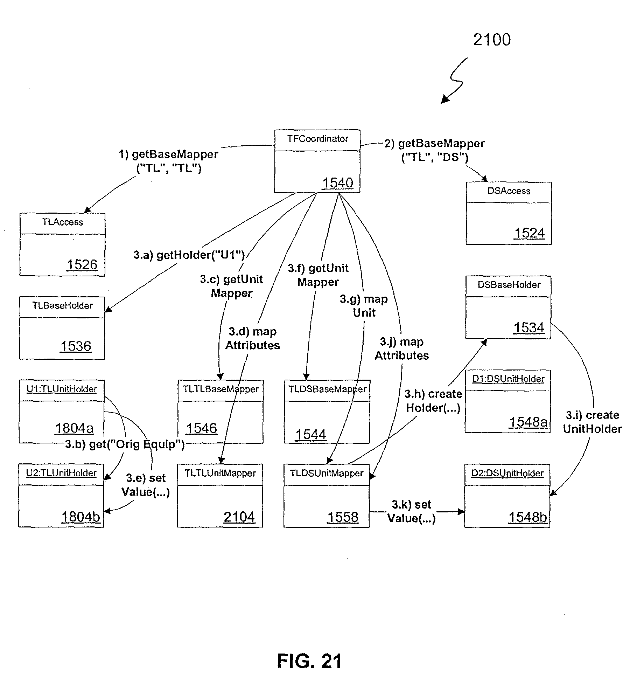

FIGS. 20 and 21 are flow diagrams which collectively represent the process of validation of dynamic simulation model data translated from a steady-state process model in accordance with the invention. In particular, FIG. 20 depicts a flow diagram 2000 representative of a first part of this validation process and FIG. 21 provides a flow diagram 2100 representative of a second part of this validation process. A corresponding flow of events is provided below.

Flow of Events for Validation of Dynamic Simulation Data

*Source to TL Validation*:

For each P2Holder,

Feed Validation:

```
errCnt += p2Holder->getValue("FeedData", feedArray);
    if (Feed->size() > 1){      // common layer does not accept multiple
feeds/prods
      //Insert a header and a stream
    }
    reconnect the inserted and original steams appropriately
```

Product Validation:

```
errCnt += p2Holder->getValue("ProductData", prodArray);
    if (Prod->size() > 1){      // common layer does not accept multiple
feeds/prods
      //Insert a drum and a stream
    }
    reconnect the inserted and original steams appropriately
```

Add connectivity information to streams by looping over equipment and checking for Feed Streams and Product Stream. For a Product Stream this unit is a downstream unit and for a Feed Stream an upstream unit.

```
for (int i=0; i<aHolder_p->getHolderCount(); i++)
{
  TFBaseHolder* unitHolder = (TFBaseHolder*)aHolder_p->getHolder(i);
  StringArray* StreamArray = new StringArray ;
  retValue = unitHolder->getValue("FeedStreams",StreamArray);

  //set upstreamunit for current feedStream objects
  for(int jj=0;jj < StreamArray->size();jj++)
  {
    string unitName = (*StreamArray)[jj].c_str() ;
    ITFHolder* streamHolder=0 ;
    streamHolder = aHolder_p->getHolder(unitName.c_str()) ;
    if(streamHolder)
    {
      errCnt += streamHolder-
>setValue("DownStreamUnit",thisUnitName.c_str());
    }
  }
  delete StreamArray ;
}
```

*TL to Product Validation:*

The validation set forth below is specific to a particular dynamic simulation program or other product. In the case of the above-referenced DYNSIM™ product, the validation procedure includes adding a valve if two units of type "pressure" are connected together. The stream connectivity information gathered above is used for this purpose.

```
//get DSBaseholder
ITFHolder* dsBaseHolder_p = getBaseHolder();
//get device type and class
std::string deviceType1, deviceType2;
std::string classUpStrmUnit, classDownStrmUnit;
errCnt += upStreamEquip_p->getValue(sDEVICETYPE.c_str(),deviceType1);
errCnt += downStreamEquip_p->getValue(sDEVICETYPE.c_str(),deviceType2) ;
// we also want to separate units even when both are
// not pressure devices if the expected pressures
// don't match between them

if( (deviceType2.compare("Pressure") == 0 &&
    deviceType1.compare("Pressure") == 0) ||
   delpFlag==true
)
{
  int localReturnVal = separatePressureNodes(
    *upStreamEquip_p,
    tlHolderObj,
    *downStreamEquip_p
  );
```

```
Where: separatePressureNode() inserts a Valve and a stream and updates
connectivity information accordingly.
```

In the exemplary embodiment validation operations are performed both in connection with mapping of steady-state simulation data to the translation layer (TL) and subsequent mapping from the translation layer to the dynamic simulation environment. In particular, when translating steady-state process model information into the common process model of the translation layer, the P2Mapper 1118 is configured to ensure that the TL data deposited in the translation layer is in a valid and complete format. In this regard the TL is considered to be in a valid and complete format to the extent it will provide sufficient information for creation of a corresponding process model within a dynamic simulation program or other application. Finally, when translating from the TL to a dynamic simulation or other application, the DSAccess subsystem 1130 is operative to validate and manipulate, if necessary, its copy of the data (DSHolders 1016) such that the newly-created dynamic process model file is valid and complete relative to the requirements of the dynamic simulation or other application. These validation operations may be further understood with reference to the following Examples:

Example (1): Assume that the applicable dynamic simulation application requires that two pressure nodes cannot be directly connected and that a valve must be inserted between the nodes. In the exemplary embodiment this type of validation is performed with respect to the DSHolders 1016; that is, a "valve" DSHolder 1016 will be added when necessary and the associated DSHolders 1016 appropriately updated. The newly-inserted valve will be seen in the TL and steady-state simulation layers only when a reverse translation from the dynamic to the steady-state simulation environment is performed. If in alternate implementations it is desired that a valve need be present between two pressure even in the TL layer itself, then it would become the responsibility of the P2Mapper 1118 to implement this when it is mapping its data into the TL layer. As a consequence, no need for the DSAccess subsystem 1130 to modify the relevant TL data objects during translation to the dynamic simulation environment.

Example (2): A mapper that maps a Stream P2Holder (with no upstream unit connected) into TL layer will also add a Source TLHolder in the TL layer (A stream should ideally be connected at both ends). The mapper will populate the Source TLHolder appropriately with the Stream P2Holder data.

Example (3): A mapper that maps a multifeed/multiproduct Valve TLHolder into DS layer will also add Header/Drum and Stream DSHolders. The mapper will populate the DSHolders appropriately with the Valve TLHolder data.

Example (4): Column: Assume that a P2 column is mapped into a single TLHolder. The mapper that maps a column TLHolder into DS layer would add and populate additional DSHolders (Pumps, HeatExchangers, etc) based on the data in the column TLHolder.

Example (5): Dynamic process model units may need additional motors, shafts, controllers, etc. The TLDS mappers could potentially be responsible for adding such units; alternatively, this could be done as part of DSAccess validation.

Overall Flow of Events for Validation Done in DSAccess and in Mappers:

1. Load data into P2Holders 1004.
2. Map from P2Holders 1004 to TLHolders 1008 using P2Mappers 1118. P2Access 1114 and P2Mappers 1118 may not be needed after this step.
3. Map data from TLHolders 1008 into DSHolders 1016 using DSMapper 1124.
4. DSAccess 1130 validates/modifies the data in its holders to be compliant with the requirements of the applicable dynamic simulation or other application. (If it can fix a problem, it will. If not it could warn the user that there is a problem and that he needs to take corrective action.)
5. DSAccess 1130 sends the data to the dynamic simulation environment.

In translating attributes in a unit operation from one product to another, a simple text file may be used by the mapper objects (e.g., P2Mapper, DSMapper) referenced in the examples above. Each of these text files, or Unit Operation Translation Files, may be denoted as "XXYYUnitMap.txt," where XX is the source product code (e.g., P2), YY is the target product code (e.g., DS), and "Unit" is the name of the source product unit class that will be translated. An exemplary format for this file will be as shown in Example (6):

## Example 6 – Specification of Unit Translation Text File

```
[MAPUNIT]
// equations here are for TargetUnitClass==MAPUNIT class
Pass=1
TargetAttribute1 = SourceAttribute1
TargetAttribute2 = Equation1
Pass=2
TargetAttribute3 = SourceAttribute2
TargetAttribute4 = Equation2


[TargetUnitClass1]
Pass=1
TargetAttribute1 = SourceAttribute1
TargetAttribute2 = Equation1
Pass=2
TargetAttribute3 = SourceAttribute2
TargetAttribute4 = Equation2

[TargetUnitClass2]
// Comments allowed at beginning of line
Pass=1
TargetAttribute1 = SourceAttribute1 // Comment at end of line
TargetAttribute2 = Equation1
Pass=2
TargetAttribute3 = SourceAttribute2
TargetAttribute4 = Equation2 +  // Equation spanning multiple lines
                   Equation3 +
                   Equation4
```

[MAPUNIT] Section

The purpose of this optional section is to specify the unit mapping, either one-to-one or one-to-many.

[TargetUnitClass] Section

This section defines the mapping of attributes from the source unit to the target unit. The file will contain one or more [TargetUnitClass] sections. The actual name inside the square brackets will be the actual unit class name that the unit is being mapped to. For example, if the section is describing the mapping of attributes from a P2 "Stream" object to a TL "Source" object, the section will be named [source] (and it will be inside the text file P2TLStream.txt).

The [TargetUnitClass] section will contain several lines of data describing the attribute mapping as shown in Example (6).

All lines between Pass=1 and Pass=2 will be executed *before* the TFMapper method customMapAttributes (). All lines after Pass=2 will be executed after customMapAttributes(). If neither Pass=1 nor Pass=2 is specified, then all lines are considered as Pass=1. If Pass=2 is specified but Pass=1 is not, then all lines between [TargetUnitClass] and Pass=2 are considered Pass=1.

Example (7) below shows an exemplary unit translation text file for translating a P2 "Valve" object into a TL "Valve" object.

## Example (7) – P2TLValveMap.txt

```
[Valve]
Pass=1
PressureDrop = PressureDropCalc
FeedStreams  = FeedData
ProdStreams  = ProdData
NumOfFeeds   = CurrentFeeds
NumOfProds   = CurrentProducts
Flow         = MergeFeed.TotalMolarRate
CV           = MergeFeed.TotalMolarRate *
               (MergeFeed.BulkMw * (PressureDropCalc *
               MergeFeed.BulkDensity)) ^ 0.5) /
               0.00075379
```

Example (8) shows the unit translation text file for translating a TL "Valve" object into a DS "Valve" object.

**Example (8) – TLDSValveMap.txt**

```
[Valve]
Pass=1
PD              = PressureDrop
NumOfFeeds   = NumOfFeeds
NumOfProds   = NumOfProds
OFEEDSTREAM = FeedStreams
OPRODSTREAM = ProdStreams
FI              = Flow
CV              = CV
```

Example (9) shows the unit translation text file for translating a P2 "Stream" object. Since the attributes of a stream can be mapped onto either a TL Stream or a TL Source, it means that two [TargetUnitClass] sections are included in the file.

**Example (9) – P2TLStreamMap.txt**

```
[Stream]    // MAPUNIT
Pass=1
MolarFlow         = TotalMolarRate
SpecificEnthalpy = TotalMolarEnthalpy/TotalMolarRate
Temperature       = Temperature
Pressure          = Pressure
VapFrac           = VaporFraction
LiqFrac           = LiquidFraction
CompMoleFrac      = TotalComposition
Density           = BulkDensity
MW                = BulkMw

[Source]   // TargetUnitClass 1
Pass = 1
Temperature      = Temperature
Pressure         = Pressure
CompMoleFrac     = TotalComposition

[Header]   // TargetUnitClass 2
Pass = 1
~DeviceType      = Pressure
Pass=2
COMPSLATE           = ~COMPSLATE
SpecificEnthalpy = TotalMolarEnthalpy
Pressure        = Pressure
```

It is observed that Example (9) contains multiple mappings in the same text file. The first mapping defines the manner in which P2 "Stream" attributes should be mapped onto a TL "Stream". For example, the P2 attribute "TotalMolarRate" will be copied to the TL Stream attribute "Molar Flow". The second section defines how P2 "Stream" attributes should be mapped onto TL "Source" units. For example, the P2 attribute "Temperature" will be copied to the TL Source attribute "Temperature".

**USER VIEWS AND INTERACTION**

Although the following describes the user views associated with the translation of a steady-state flowsheet and its importation into a dynamic simulation environment, the present invention is equally applicable to the reverse translation process.

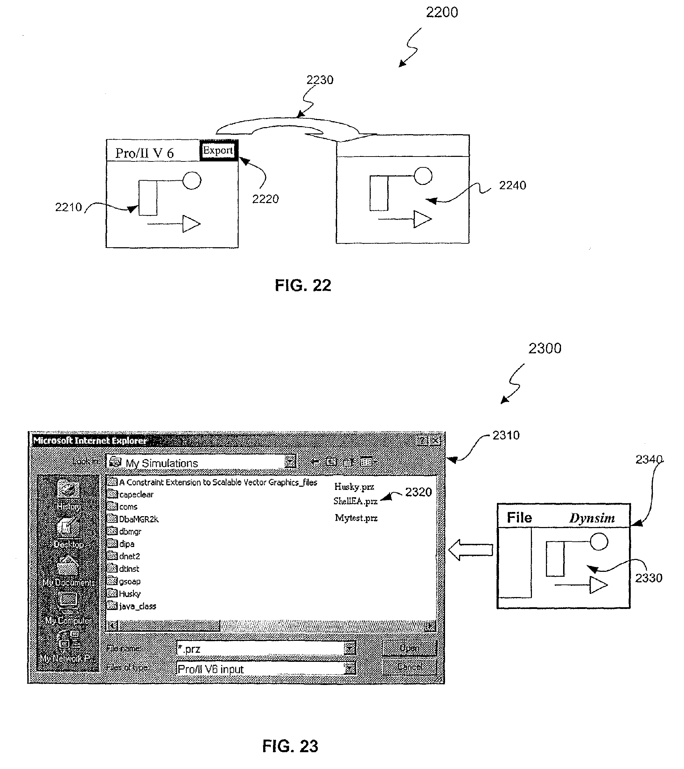

Turning now to FIG. 22, a first user view 2200 is provided in which a user is assumed to have developed a steady-state flowsheet 2210 using the steady-state simulation program 120. After the program 120 has indicated that all the necessary data has been provided for the flowsheet, the user may select an 'Export' button 2220 or the like to begin the flowsheet translation process 2230. As discussed above, the translation process 2230 involves creating a dynamic process model based upon the steady-state process model represented by the flowsheet 2210. Upon successful translation of the steady-state process model into this dynamic process model, the dynamic simulation program 130 is started and populated with a flowsheet 2240 representative of the dynamic process model.

FIG. 23 illustratively represents a second user view 2300 in which a user is operating within the environment of the dynamic simulation program 130 upon a steady-state flowsheet previously created and saved by the steady-state simulation program 120. Specifically, user interface window 2310 is generated upon user selection of an 'Open' command when running the dynamic simulation program 130. A steady-state simulation 2320 previously created by the steady-state simulation program 130 may then be selected, which results in initiation of the process model translation process of the invention. Upon successful completion of this translation process, a flowsheet 2330 representative of the dynamic process model resulting from the translation is displayed within a window 2340 created by the dynamic simulation program 130.

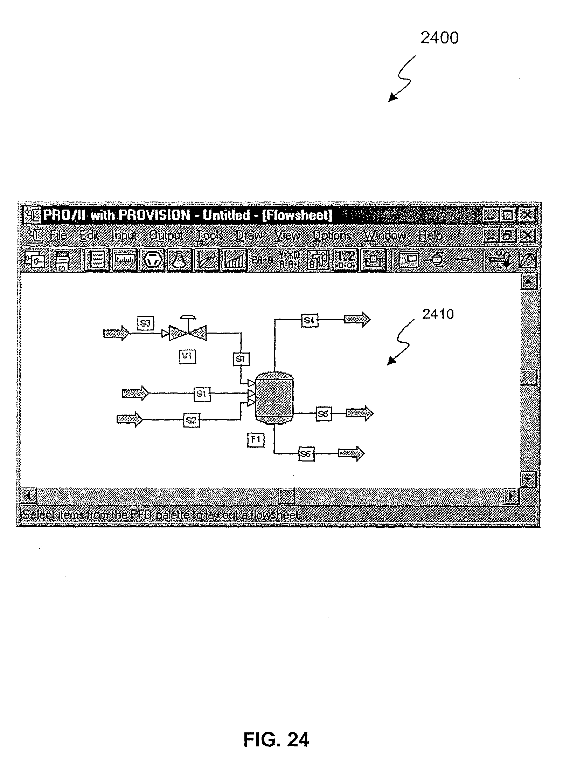

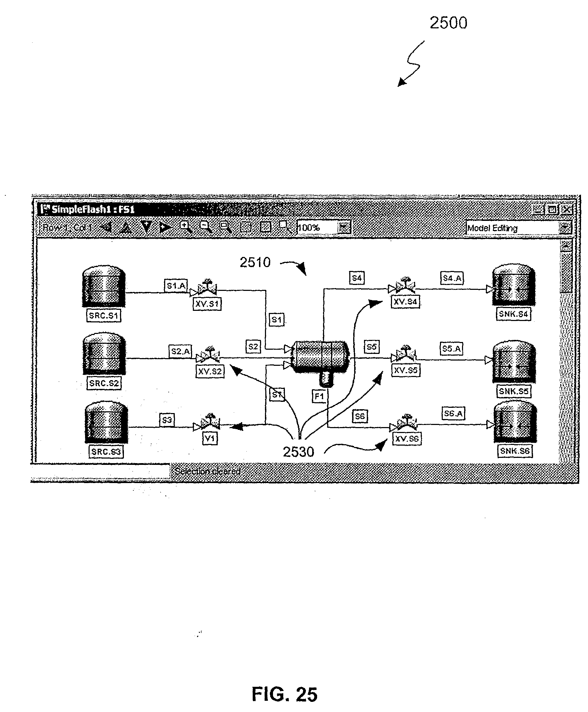

FIGS. 24 and 25 provide additional user views illustratively representative of a particular flowsheet translation process of the present invention. Specifically, FIG. 24 depicts a user interface window 2400 generated by the steady-state simulation program 120 which contains a steady-state flowsheet 2410 to be translated into a dynamic simulation environment. In order to initiate translation of the flowsheet 2410, the user launches the dynamic simulation program 130 and selects "File->Open" from a conventional drop-down menu (not shown). The user selects a predetermined extension (e.g., *.prz) from the file type and files associated with the steady-state simulation program 120 are displayed (see, e.g., FIG. 23). After selecting one such file, the dynamic simulation program 130 opens and a dynamic simulation flowsheet 2510 is displayed within user window 2500 (FIG. 25). The flowsheet 2510 may then be conventionally invoked (e.g., by selecting "Start/Run") from within the context of the dynamic simulation program 130.

As may be appreciated with reference to FIGS. 24 and 25, various valves 2530 were automatically inserted into the flowsheet 2510 during the process of translating the steady-state flowsheet 2410. In lieu of such automatic valve insertion, a number of other approaches are possible. For example, a list of all streams needing a flow device could be provided to the user. A user could then "right click" on the stream and choose "Insert Valve" or "Insert Pipe" from a displayed dialog. The insert would "split" the stream, insert a valve, and size the valve appropriately. Alternatively, a list of all streams needing a flow device could be provided, and a "check box" for valve insertion could be associated with each stream. Upon then selecting "Apply" or "OK", all of the valves for which check boxes were selected would be added and sized.

### EXEMPLARY INTERFACE AND MAPPER IMPLEMENTATIONS

The following includes pseudocode corresponding to implementations of various interfaces (i.e., ITFAccess, ITFHolder) and of a mapper (i.e., TFMapper) identified in FIG. 16.

### Public Interface

The basic interfaces are implemented as C++ abstract base classes.

## Interface ITFAccess

### Defines access to product-specific initialization and utilities.

```
// Abstract base class ('interface') for product access objects.
// The access object is the 'entry' point by which the
// Translation Engine initially interacts with the
// specific products involved in the translation process.

class ITFAccess
{
protected:
  // destructor must be protected (or private?) so that
  // outside code cannot do a delete. Use release() instead.
  virtual ~ITFAccess();

public:

  // Call this method when you are done using the mapper
  // and you want to delete it.
  // The implementing object should clean up its memory
  // and call 'delete this'.
  virtual int release() = 0;

  // Initialize the access object. This is called when the
  // translation process is just getting started. The coordinator
```

```
// object provided will contain information such as the "from" and "to"
// products and the input file name.
virtual int initialize(ITFCoordinator *pCoordinator) = 0;

// Load data from the native database into the holder objects.
virtual int loadData(const char *pInputName) = 0;

// Send data from the holder objects to the native database.
virtual int sendData() = 0;

// Returns the base mapper which can be used to get an
// object-specific mapper objects.
virtual ITFMapper *getBaseMapper(const char *pFromType, const char *pToType) = 0;

// You supply a connection table pointer generated by
// ITFHolder::createConnectionTable()
// and this method will make modifications so that the connectivity
// adheres to the rules of the specific product represented by the
// implementing class.
// After calling this method, you will then typically call
// ITFHolder::updateHoldersFromTable() which will actually update the
// holders to reflect the modified connection table.
virtual int validateTable(void *pConnectionTable) = 0;

// Returns the base holder.
virtual ITFHolder* getBaseHolder() = 0;
};
```

## Interface ITFHolder

```
// Abstract base class ('interface') for holder objects.
//
// This design allows a holder object to contain a
// collection of other holder objects.
//
// In the translator, there are two basic types of holder objects:
// (1) the 'base holder', which is the single top-level
//     holder that contains a collection of holder objects.
// (2) the holder object for a single unit/stream/object.
//
// The term 'base holder' is used in two ways:
// (1) the 'root' holder which contains the list of all other holders.
// (2) the base class from which object-specific holder classes are derived.

#include "ITFCommon.h"

class ITFHolder
{
public:
    ITFHolder(){};
    virtual ~ITFHolder(){};


public:

    // Call this method when you are done using the mapper
    // and you want to delete it.
    // The implementing object should clean up its memory
    // and call 'delete this'.
    // A 'base holder' should remove all holder objects from
    // its internal collection.
    virtual int release() = 0;

    //-----------------------------------------------------------------------
    // Aggregation methods used by the 'base holder'
    //-----------------------------------------------------------------------

    // Returns the number of holder objects in this base holder.
    virtual int size() = 0;

    // Returns a pointer to an existing holder object in the base holder
    // object's collection with the specified index.
    virtual ITFHolder* getHolder(int i) = 0;

    // Returns a pointer to an existing holder object in the base holder
    // object's collection with the specified name.
    virtual ITFHolder* getHolder(const char *pName) = 0;

    // Creates a new holder object of the specified unit (or stream)
    // name and class (type).
    // After creating, the caller must use appropriate setAttribute() calls
    // to specify the name and other attributes.
    virtual ITFHolder* createHolder(const char *pName, const char *pType) = 0;

    // Deletes an existing holder object with the specified name.
    virtual int deleteHolder(const char *pName) = 0;

    //-----------------------------------------------------------------------
    // Aggregation methods used by the 'base holder' during validation
    //-----------------------------------------------------------------------

    // Creates the connection map from information in the collection of 'regular'
    // holder objects. This method creates and returns a connection table.
    virtual void* createConnectionTable() = 0;

    // Updates the collection of 'regular' holder objects based on updated
    // information on the supplied map.
    // This includes creating objects as well as adding "Source" and "Destination"
    // (units) on a stream and updating units connections (Feed= , Prod=  etc.)
    virtual void updateHoldersFromTable(void *pConnectionTable) = 0;

    //-----------------------------------------------------------------------
    // Status methods used by a regular holder
    //-----------------------------------------------------------------------

    // Returns 'true' if this holder has been initialized.
    // This is used during mapping from TF to DS.  If initialized use it,
    // if not need to get data from "Original Equipment"
    virtual bool isInitialized() = 0;

    // Sets or clears the 'initialized' flag.
    virtual void setInitialized(bool initialized) = 0;
```

```
// Returns 'true' if this holder has been modified.
// Also used while mapping from TF to DS.  If dirty then the corresponding DS
// holder must be updated
virtual bool isDirty() = 0;

// Sets or clears the dirty flag.
virtual void setDirty(bool dirty) = 0;

//-----------------------------------------------------------------------------
// Data access methods used by a regular holder
//-----------------------------------------------------------------------------

// Note: attribute names must be unique. You cannot have a string
// attribute name 'xxx' and a float attribute also named 'xxx'.

// get long value
virtual int getValue(const char* attrName, long& value)=0 ;
// get float value
virtual int getValue(const char* attrName, float& value)=0;
// get string value
virtual int getValue(const char* attrName, char*& value)=0;
// get array values
virtual int getValue(const char* attrName, IntArray*& value)=0;
virtual int getValue(const char* attrName, FloatArray*& value)=0;
virtual int getValue(const char* attrName, StringArray*& value)=0;
virtual int getValue(const char* attrName, ITFHolderArray*& value)=0;

// Set Value methods
virtual int setValue(const char* attrName, long value)=0;
virtual int setValue(const char* attrName, float value)=0;
virtual int setValue(const char* attrName, const char* value)=0;
virtual int setValue(const char* attrName, IntArray* value)=0;
virtual int setValue(const char* attrName, FloatArray* value)=0;
virtual int setValue(const char* attrName, StringArray* value)=0;
virtual int setValue(const char* attrName, ITFHolderArray* value)=0;

// Following methods get the values by index

// get Integer value
virtual int getValue(long holderIndex, long& value) =0;
// get float value
virtual int getValue(long holderIndex, float& value)=0;
// get string value
virtual int getValue(long holderIndex, char*& value)=0;
// get array values
virtual int getValue(long holderIndex, IntArray*& value)=0;
virtual int getValue(long holderIndex, FloatArray*& value)=0;
virtual int getValue(long holderIndex, StringArray*& value)=0;
virtual int getValue(long holderIndex, ITFHolderArray*& value)=0;
};
```

## class TFMapper

```
// Base class for mapper objects.

// A 'base mapper' object is used by each product in two ways:
// (1) it provides a base implementation class for object-specific
//      mappers, and
// (2) it also provides a singleton object with the method
//      getUnitMapper() that can be used to return
//      the individual object-specific mappers.

class TFMapper
{
public:
  TFMapper();
  virtual ~TFMapper();

  // Call this method when you are done using the mapper
  // and you want to delete it.
  // The implementing object should clean up its memory
  // and call 'delete this'.
  virtual int release() = 0;

  // When this object is a base mapper, this method will
  // return the object-specific ITFMapper object which will
  // translate the specified unit from the source
  // product to the target product.
  //
  // If this object is a unit-specific mapper object, then
  // this method will return null.
  //
  // pUnitClass - the unit class for which a mapper is desired.
  virtual TFMapper* getUnitMapper(const char *pUnitClass);

  // Maps the supplied source unit (or object) to one or more
  // destination objects which are added to the collected
  // represented by the supplied base holder object.
  virtual int mapUnit(ITFHolder *pSourceUnit, ITFHolder *pTargetBaseHolder) = 0;

  // Maps attributes from the specific source unit (or object)
  // to one or more target objects.
  // If pTargetUnit is specified, then attributes will be mapped from
  // the source unit to that target unit only. Otherwise, attributes
  // may be mapped to any unit in the collection identified by
  // pTargetBaseHolder.
  // This method is actually implemented in TFMapper.
  virtual int mapAttributes(ITFHolder *pSourceUnit,
                            ITFHolder *pTargetBaseHolder,
                            ITFHolder *pTargetUnit=0L);

  // The developer can optionally implement this method to perform
  // custom attribute mapping in C++. This custom mapping
  // occurs after "pass 1" (and before "pass 2") of the equation
  // processing.
  //
  // This method is invoked by TFMapper::mapAttributes()
  virtual int customMapAttributes(ITFHolder *pSourceUnit,
                                  ITFHolder *pTargetBaseHolder,
                                  ITFHolder *pTargetUnit);
};
```

## EXEMPLARY IMPLEMENTATION OF FLOWSHEET TRANSLATION AND VALIDATION PROCESS

The following includes pseudocode descriptive of the flowsheet translation and validation process of the present invention illustratively represented by FIGS. 16-21.

## 1. Load data into P2Holders (as described previously)

## 2. Map from P2Holders to TLHolders

```
p2BaseHolder_p = p2Access->getBaseHolder();
TLBaseHolder_p = TLAccess_p->getBaseHolder();

for(i=0; i< p2BaseHolder_p->size();  i++)
{
  // Get the holder
  P2Holder_p = p2BaseHolder_p->getHolder( i );

  // Get the mapper corresponding to the holder
  function_p = p2Access->getMapper("P2","TL");
  ITFMapper* aUnitMapper_p =
    function_p(P2Holder_p ->getClassName());
  // We could potentially do above with one call
  // ITFMapper* aUnitMapper_p = p2Access->getMapper("P2","TL",
  //                       P2Holder_p ->getClassName());

  aUnitMapper_p->map(P2Holder_p, TLBaseHolder_p); // See below for details
  // Note: There are no separate calls for mapUnit and mapAttributes.
  // mapAttributes is called from within map.
  // Avoids the need for the mapper to keep track of holder pointers.
  // Could be split if needed.
}

// Example of a mapper that maps from one P2Holder to multiple TL holders.
// P2Stream mapping to Stream  or Source+Stream or Stream+Sink or
// Source TLHolders.

P2TLStreamMapper::map(P2Holder_p, TLBaseHolder_p)
{
 // The attribute names are made up.

 int upStreamUnitPresent = P2Holder_p->getAttribute("In");
 int downStreamUnitPresent = P2Holder_p->getAttribute("Out");

 if (upStreamUnitPresent && downStreamUnitPresent)
 {
   TLStreamHolder_p = TLBaseHolder_p->createHolder(P2Holder_p->getName());
   TLStreamHolder_p->setClassName("Stream");

   // Since mapAttributes is called here P2TLStreamMapper need not save
   // pointers to the TLHolders that it creates. If mapAttributes is called
   // by the Coordinator the P2Holders and TLHolders pointers have to be
   // cached in P2TLStreamMapper

   mapAttributes(P2Holder_p, TLStreamHolder_p);
 }
 else if (!upStreamUnitPresent && !downStreamUnitPresent)
 {
   TLSourceHolder_p = TLBaseHolder_p->createHolder(P2Holder_p->getName());
   TLSourceHolder_p->setClassName("Source");

   mapAttributes(P2Holder_p, TLStreamHolder_p);
 }
 else if (upStreamUnitPresent && !downStreamUnitPresent)
 {
   TLStreamHolder_p = TLBaseHolder_p->createHolder(P2Holder_p->getName());
   TLStreamHolder_p->setClassName("Stream");
   TLSourceHolder_p   =   TLBaseHolder_p->createHolder(P2Holder_p->getName()   +
"_" + "SRC");
```

```
        TLSourceHolder_p->setClassName("Source");

        mapAttributes(P2Holder_p,TLStreamHolder_p);
        mapAttributes(P2Holder_p,TLSourceHolder_p);
      }
      else if (!upStreamUnitPresent && downStreamUnitPresent)
      {
        TLStreamHolder_p = TLBaseHolder_p->createHolder(P2Holder_p->getName());

        mapAttributes(P2Holder_p,TLStreamHolder_p);

        TLSinkHolder_p = TLBaseHolder_p->createHolder(P2Holder_p->getName() + "_"
+ "SNK");
        TLSinkHolder_p->setClassName("Sink");

        mapAttributes(P2Holder_p,TLStreamHolder_p);
        mapAttributes(P2Holder_p,TLSinkHolder_p);
      }
    }

    P2TLStreamMapper::mapAttributes(P2Holder_p, TLHolder_p)
    {
     // Attribute names are made up

     if (TLHolder_p->getClassName() == "Stream")
     {
      // P2 stream to TL Stream

      TLHolder_p->setAttribute("F",  P2Holder_p->getAttribute("Flow"));
      TLHolder_p->setAttribute("MW", P2Holder_p->getAttribute("Molwt"));
      TLHolder_p->setAttribute("H",  P2Holder_p->getAttribute("Enthalpy"));
     }
     else if (TLHolder_p->getClassName() == "Source")
     {
      // P2 stream to TL Source

      TLHolder_p->setAttribute("P",  P2Holder_p->getAttribute("Pres"));
      TLHolder_p->setAttribute("T",  P2Holder_p->getAttribute("Temp"));

      int downStreamUnitPresent = P2Holder_p->getAttribute("Out");
      if (downStreamUnitPresent)
      {
        // We need this check because a stream with no connections
        // maps to just a Source.
        TLHolder_p->setAttribute("PRODSTREAM[0]",  P2Holder_p->getName());
      }
     }
     else if (TLHolder_p->getClassName() == "Sink")
     {
      // P2 stream to TL Sink

      TLHolder_p->setAttribute("FEEDSTREAM[0]",  P2Holder_p->getName());
      TLHolder_p->setAttribute("P",  P2Holder_p->getAttribute("Pres"));
     }
     else
     {
      // error!
      // send message or throw exception!
     }
    }
```

## 3. Map Data from TLHolders To DSHolders

```
    TLBaseHolder_p = TLAccess->getBaseHolder();
    DSBaseHolder_p = DSAccess_p->getBaseHolder();

    for(i=0; i< TLBaseHolder_p->size();  i++)
    {
      // Get the holder
      TLHolder_p = TLBaseHolder_p->getHolder( i );

      // Get the mapper corresponding to the holder
      function_p = DSAccess->getMapper("TL","DS");
      ITFMapper* aUnitMapper_p =
        function_p(TLHolder_p->getClassName());
```

```
   // We could potentially do above with one call
   // ITFMapper* aUnitMapper_p = DSAccess->getMapper("TL","DS",
   //                            TLHolder_p->getClassName());

   aUnitMapper_p->map(TLHolder_p, DSBaseHolder_p); // See below for details
   // Note: There are no separate calls for mapUnit and mapAttributes.
   // mapAttributes is called from within map.
   // Avoids the need for the mapper to keep track of holder pointers.
   // Could be split if needed.
}

// Example of a mapper that maps from one TLHolder to multiple DS holders
// TLValveStream (multifeed) mapping to Header+Stream+Valve

// TLDSValveMapper, TLDSPipeMapper etc could inherit from
// TLDSFlowDeviceMapper which has a method processTLMultiFeedProd

TLDSValveMapper::map(TLValveHolder_p, DSBaseHolder_p)
{
 // Attribute names are made up
 DSValveHolder_p = DSBaseHolder_p->createHolder(TLValveHolder_p->getName());
 DSValveHolder_p->setClassName("VALVE");

 // populate valve holder object attributes
 mapAttributes(TLValveHolder_p, DSValveHolder_p);

  TLDSFlowDeviceMapper::processTLMultiFeedProd(TLValveHolder_p,
DSBaseHolder_p);
}

TLDSValveMapper::mapAttributes(TLValveHolder_p, DSHolder_p)
{
 // Attribute names are made up
 if (DSHolder_p->getClassName() == "VALVE")
 {
  DSHolder_p->setAttribute("Cv",  TLValveHolder_p->getAttribute("Cv"));

  int numFeeds = TLFDHolder_p->getAttribute("NumFeeds");
  if (numFeeds == 1)
  {
   DSHolder_p->setAttribute("OFEEDSTREAM",              TLValveHolder_p-
>getAttribute("FeedStream"));
  }
  else if (numFeeds > 1)
  {
   std::string MergedStreamName =
TLValveHolder_p->getAttribute("MergedStreamName");
    TLMergedStreamHolder_p = TLValveHolder_p->getHolder(MergedStreamName);

   DSHolder_p->setAttribute("OFEEDSTREAM",  MergedStreamName);
  }
  else
  {
   // error!
  }
 }
}


TLDSFlowDeviceMapper::processTLMultiFeedProd(TLFDHolder_p, DSBaseHolder_p)
{
 int numFeeds = TLFDHolder_p->getAttribute("NumFeeds");
 if (numFeeds > 1)
 {
   // Dynsim flowdevices cannot take multiple feeds. Have to add
   // a Header and Stream.

   DSHeaderHolder_p = DSBaseHolder_p->createHolder(TLFDHolder_p->getName() +
"_HDR");
   DSHeaderHolder_p->setClassName("HEADER");

   DSStreamHolder_p = DSBaseHolder_p->createHolder(TLFDHolder_p->getName());
   DSStreamHolder_p->setClassName("STREAM");

   std::string           MergedStreamName         =          TLFDHolder_p-
>getAttribute("MergedStreamName");
```

```
TLMergedStreamHolder_p =TLFDHolder_p->getHolder(MergedStreamName);

// TL merged stream to DS Stream
TLDSStreamMapper::mapAttributes(TLMergedStreamHolder_p, DSHolder_p);

// Populate DS Header

// Loop over the feed streams
TLHolder_p->setAttribute("OFEEDSTREAM[i]",
TLFDHolder_p->getAttribute("FeedStream[i]"));
TLHolder_p->setAttribute("P",
TLMergedStreamHolder_p->getAttribute("Pres"));
}

// Add similar logic for multiple products...
// Add a Stream and a Drum?
}
```

## 4. Validate Dynsim holders

```
DSAccess->validate();

DSAccess::validate()
{
DSBaseHolder_p = getBaseHolder();

// Do any processing that may be needed for validation
// For validation streams need to know what they are
// connected to

for (int i=0; i< DSBaseHolder_p.size(); i++)
{
DSHolder_p = DSBaseHolder_p->getHolder(i);
DSHolder_p->preProcess();
}

validateModThermo(); // Optional?

// call validate on all the holder objects.
// For some objects there may be validation,
// for some there may not be any
// Upto DSAccess to decide what to validate

for (int i=0; i< DSBaseHolder_p.size(); i++)
{
DSHolder_p = DSBaseHolder_p->getHolder(i);
DSHolder_p->validate();
}

}

preProcess and validate may be methods that are
implemented in DSBaseHolder class (all DSHolders
inherit from DSBaseHolder).

DSBaseHolder will have two pointers
ITFHolder* inUnitHolder = NULL;
ITFHolder* outUnitHolder = NULL;
which will be used only if the Holder is a StreamHolder.

DSBaseHolder::preProcess()
{
// For now, all we do is update the stream holders
if (isFlowDevice(getClassName()))
{
DSFeedStreamHolder_p = getHolder(getAttribute("OFEEDSTREAM"));
DSFeedStreamHolder_p->outUnitHolder = this;

DSProdStreamHolder_p = getHolder(getAttribute("OPRODSTREAM"));
DSProdStreamHolder_p->inUnitHolder = this;
}
else if (isPressureNode(getClassName()))
{
// Loop over all the feed and product streams
```

```
        DSFeedStreamHolder_p = getHolder(getAttribute("OFEEDSTREAM[i]"));
        DSFeedStreamHolder_p->outUnitHolder = this;

        DSProdStreamHolder_p = getHolder(getAttribute("OPRODSTREAM[i]"));
        DSProdStreamHolder_p->inUnitHolder = this;
    }
}

DSBaseHolder::validate()
{
  std::string DSClassName = getClassName();
  if (DSClassName == "STREAM")
  {
    if (!inUnitHolder && !outUnitHolder)
    {
      // OK
    }
    else if (!inUnitHolder || !outUnitHolder)
    {
      // Error! Send message
    }
    else if (inUnitHolder || outUnitHolder)
    {
      // Check for pressureNodes connected to each other
      // except in the case of a separator connected to
      // column bottom draw?

      if ( isPressureNode(inUnitHolder->getClassName()) &&
           isPressureNode(outUnitHolder->getClassName())
         )
      {
        // This is a problem. We have to insert a valve
        // in between.

        // P1->S1->P2
        // Update to P1->S1->S1_VLV->P2_STRM->P2

        // Create a valve (or pipe?) and stream
        dsNewValveHolder_p = createHolder(getName() + "_VLV");
        dsNewValveHolder_p->setClassName("VALVE");

        dsNewStreamHolder_p = createHolder(outUnitHolder->getName() + "_STRM");
        dsNewStreamHolder_p->setClassName("STREAM");

        // Populate the attributes for inserted valve and stream by
        // calling the StreamToValve and StreamToStream mapper. The Source side
        // stream in this case is the original stream that connected the
        // two pressure nodes.

        // ....

        // Update the connectivity info of the pressure node
        // Find and update OFEEDSTREAM[i]

        outUnitHolder->setAttribute("OFEEDSTREAM[i]",
dsNewStreamHolder_p->getName());
      }

      // Check for compslate
      // May not be needed for ProII to Dynsim
      if ( inUnitHolder->getAttribute("COMPSLATE") !=
           outUnitHolder->getAttribute("COMPSLATE"))
         )
      {
        // Error!
      }

      // Check for methodslate
      if ( inUnitHolder->getAttribute("METHODSLATE") !=
           outUnitHolder->getAttribute("METHODSLATE"))
         )
      {
        // Could be a problem - Warning?
      }

      // Note: Dynsim checks for above errors.
```

```
        }
      }
    }
    else if (isFlowDevice(DSClassName))
    {
      // FlowDevices require 1 Feed and 1 Product stream
      // or no stream connections.
      // This validation could be done during mapping itself.
    }
    else
    {
      // do nothing
    }

    // Any other validation?
  }
```

## 5. Send the data to Dynsim

```
DSAccess->sendData();
```

The foregoing description, for purposes of explanation, used specific nomenclature to provide a thorough understanding of the invention. However, it will be apparent to one skilled in the art that the specific details are not required in order to practice the invention. In other instances, well-known circuits and devices are shown in block diagram form in order to avoid unnecessary distraction from the underlying invention. Thus, the foregoing descriptions of specific embodiments of the present invention are presented for purposes of illustration and description. They are not intended to be exhaustive or to limit the invention to the precise forms disclosed, obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. It is intended that the following Claims and their equivalents define the scope of the invention.

**Claims**

1. A method for process model translation, said method comprising:

   generating a common process model based upon a first process model capable of being utilized by a first simulation program; and
   generating a second process model based upon said common process model, said second process model being capable of being utilized by a second simulation program.

2. The method of claim 1 wherein said common process model includes a first plurality of elements, said generating a second process model including mapping said first plurality of elements into a second plurality of elements of said second process wherein said second plurality is greater than said first plurality.

3. The method of claim 1 or claim 2 further including validating that said second process model conforms with requirements of said second simulation program.

4. A method for process model translation, the method comprising:

   transferring information from a first process model capable of being used by a first simulation program to a common process model; and
   generating a second process model capable of being used by a second simulation program, the generating including:

   estimating, based upon the information within the common process model, data required during operation of a second simulation program; and
   inserting representations of one or more units of equipment into the common process model.

5. The method of claim 4 wherein the generating further includes performing consistency checks upon a translated flowsheet corresponding to the second process model.

6. The method of claim 4 or claim 5 further including modifying the common process model in response to one or more changes to a process being simulated by at least the first simulation program.

7. The method of any one of the preceding claims wherein the first simulation program corresponds to a steady-state simulation program and wherein the second simulation program corresponds to a dynamic simulation program.

8. The method of any one of claims 1 to 6, wherein the first simulation program corresponds to a dynamic simulation program and wherein the second simulation program corresponds to a steady-state simulation program.

9. A process model translation framework in communication with a steady-state process model database and a dynamic process model database, said translation framework comprising:

   a steady-state process model objects holder disposed to interface with said steady-state process model database;
   a dynamic process model objects holder disposed to interface with said dynamic process model database; and
   a translation-layer objects holder operatively coupled to said steady-state process model objects holder and said dynamic process model objects holder, said translation-layer objects holder defining a common process model.

10. The translation framework of claim 9 wherein the dynamic process model objects holder includes a plurality of dynamic simulation objects corresponding to equipment units defined within the dynamic process model database.

11. The translation framework of claim 9 or claim 10 wherein the steady-state process model objects holder includes a plurality of steady-state simulation objects corresponding to equipment units defined within the steady-state process model database.

12. The translation framework of any of claims 9 to 11 wherein the translation-layer objects holder includes a plurality of common process model units corresponding to one of plural steady-state simulation objects defined within the steady-state process model objects holder.

13. A translator module configured to translate a first process model useable by a first simulation program into a second process model useable by a second simulation program, the translator module comprising:

   a model subsystem disposed to define a plurality of equipment models corresponding to equipment units referenced in a flowsheet produced by the first simulation program, the model subsystem defining at least first and second equipment models based upon one of the equipment units;
   a validation subsystem configured to perform a validation operation with respect to the plurality of equipment models; and
   a streams subsystem configured to store a plurality of stream objects based upon information defined within first process model and to create at least one additional stream for providing a connection between the at least first and second equipment models.

14. The translator module of claim 13 wherein the streams subsystem is further configured to create a source model associated with one of the plurality of stream objects.

15. The translator module of claim 13 or claim 14 wherein the validation operation comprising determining whether erroneous inconsistencies exist among ones of the plurality of equipment models.

16. A system for process model translation, said system comprising:

   means for creating a first process model capable of being utilized by a first simulation program;
   means for generating a common process model based upon said first process model; and
   means for generating a second process model based upon said common process model, said second process model being capable of being utilized by a second simulation program.

17. The system of claim 16 wherein said common process model includes a first plurality of elements, said means for generating a second process model including means for mapping said first plurality of elements into a second plurality of elements of said second process wherein said second plurality is greater than said first plurality.

18. The system of claim 16 or claim 18 further including means for validating that said second process model conforms with requirements of said second simulation program.

FIG. 1

EP 1 560 087 A2

FIG. 2

EP 1 560 087 A2

FIG. 3

400

TRANSFER DATA AVAILABLE FROM STEADY-STATE PROCESS MODEL TO COMMON PROCESS MODEL WITHIN THE TRANSLATION LAYER
404

CALCULATE OR ESTIMATE NEEDED DATA
(e.g., Sizes, Metal Mass, Volumetric Flows)
412

INSERT EQUIPMENT AS NECESSARY
(e.g., Values Between Presure Nodes)
416

PERFORM CONSISTENCY CHECKS ON TRANSLATED FLOWSHEET
420

408

AUGMENT COMMON PROCESS MODELS AS NECESSARY
424

FIG. 4

**FIG. 5**

EP 1 560 087 A2

EP 1 560 087 A2

CLIENT

GUI

MODULE INTERFACE

512

602

604

FIG. 6

**FIG. 7**

508

734

DYNAMIC SIMULATION MODULE  744

TRANSLATOR MODULE  760

MODEL SUBSYSTEM  780

STREAM SUBSYSTEM  782

THERMODYNAMICS SUBSYSTEM  784

GRAPHICS SUBSYSTEM  786

FLOWSHEET SUBSYSTEM  788

VALIDATION SUBSYSTEM  790

710

SOLVER  702

SOLUTION ENGINE

SOLUTION ENGINE

706

MODELING ENGINE  704

MODULE INTERFACE  604

740

DATA RECONCILIATION MODULE  750

MODELING ENGINE FRAMEWORK

MODULE INTERFACE

708

604

CPU  730

NETWORK INTERFACE  738

TO/FROM LAN 502

FIG. 8

FIG. 9

EP 1 560 087 A2

1000

FIG. 10

1100

**FIG. 11**

**FIG. 12**

EP 1 560 087 A2

FIG. 13

FIG. 14

1500

Framework

Product-Specific

Unit-Specific

«package»
TF

Translator
Engine    1510

1214a

«package»
TF

Translator
Utilities    1520

«interface»
ITF Coordinator    1530

«singleton»
TF Coordinator    1540

«interface»
ITF Access    1550

«interface»
ITF Holder    1560

TFMapper    1570

Validation
Algorithm    1580

1214b

«package»
P2

P2Access    1522

P2BaseHolder    1532

P2TLBaseMapper    1542

1210

«package»
DS

DSAccess    1524

DSBaseHolder    1534

TLDSBaseMapper    1544

1216

«package»
TL

TLAccess    1526

TLBaseHolder    1536

TLTLBaseMapper    1546

«package»
aUnit1

P2ValveHolder    1528

P2TLValveMapper    1538

DSValveHolder    1548

TLDSValveMapper    1558

«package»
aUnit2

RMValveHolder    1590

RMTLValveMapper    1592

TLRMValveMapper    1594

FIG. 15

1600

«interface»
ITFHolder

__1560__

«interface»
ITFAccess

__1550__

TFMapper

__1570__

P2BaseHolder

__1532__

1) getBaseHolder()

P2Access

__1522__

3) getBaseMapper
("P2", "TL")

P2TLBaseMapper

__1542__

P2UnitHolder

__1528__

2) getHolder(...)

\*

4) getUnitMapper("Unit")

\*

P2TLUnitMapper

__1538__

**FIG. 16**

1700

| TFCoordinator | | P2Access |
|---|---|---|
| | 1) loadData | |
| 1540 | | 1522 |

2) getBaseHolder

3.a) createHolder

| P2BaseHolder |
|---|
| 1532 |

3.c) setValue

3.b) createUnitHolder

| P2UnitHolder |
|---|
| 1528 |

**FIG. 17**

1800

TFCoordinator

1) getBaseHolder

2) getBaseMapper
("P2", "TL")

1540

3) getBaseHolder

TLAccess

1526

P2Access

1522

4.a) getHolder

4.f) mapAttributes

TLBaseHolder

1536

P2BaseHolder

1532

4.c) mapUnit

4.b) getUnitMapper

4.d) create
Holder(...)

4.e) createUnit
Holder

P2UnitHolder

1529

P2TLBaseMapper

1542

P2TLUnitMapper

1558

4.g) setValue(...)

TLUnitHolder

1804

FIG. 18

1900

TFCoordinator

1540

1) getBaseHolder

2) getBaseHolder

3) getBaseMapper
("TL", "DS")

DSAccess

1524

TLAccess

1526

4.a) getHolder

4.f) mapAttributes

DSBaseHolder

1534

TLBaseHolder

1536

4.c) mapUnit

4.b) getUnitMapper

4.d) create
Holder(...)

4.e) createUnit
Holder

TLUnitHolder

1804

TLDSBaseMapper

1544

TLDSUnitMapper

1558

4.g) setValue(...)

DSUnitHolder

1548

**FIG. 19**

2000

TFCoordinator

1540

1) getBaseHolder

2) createConnectionTable

3) validateTable

4) updateHoldersFromTable

TLAccess

1522

DSAccess

1524

TLBaseHolder

1536

DSBaseHolder

1534

4.a) createUnitHolder

U1:TLUnitHolder

1804a

D1:DSUnitHolder

1548

U2:TLUnitHolder

1804b

FIG. 20

2100

TFCoordinator

1540

1) getBaseMapper
("TL", "TL")

2) getBaseMapper
("TL", "DS")

DSAccess

1524

TLAccess

1526

3.a) getHolder("U1")

3.f) getUnit
Mapper

3.c) getUnit
Mapper

3.g) map
Unit

DSBaseHolder

1534

TLBaseHolder

1536

3.d) map
Attributes

3.j) map
Attributes

3.h) create
Holder(...)

D1:DSUnitHolder

1548a

3.i) create
UnitHolder

U1:TLUnitHolder

1804a

TLTLBaseMapper

1546

TLDSBaseMapper

1544

3.b) get("Orig Equip")

U2:TLUnitHolder

1804b

3.e) set
Value(...)

TLTLUnitMapper

2104

TLDSUnitMapper

1558

3.k) set
Value(...)

D2:DSUnitHolder

1548b

**FIG. 21**

FIG. 22

FIG. 23

2400

2410

**FIG. 24**

2500

FIG. 25